# EUROPÄISCHE PATENTSCHRIFT

(11) **EP 2 057 397 B1**
(45) Veröffentlichungstag und Bekanntmachung des Hinweises auf die Patenterteilung: **24.04.2013**
(21) Anmeldenummer: 07802803.2
(22) Anmeldetag: 22.08.2007
(51) Int. Cl.: F16L 13/14, B21D 39/04, B25B 27/10

(54) **VERFAHREN ZUM VERPRESSEN EINES PRESSFITTINGS SOWIE PRESSWERKZEUG HIERZU**
METHOD FOR THE PRESSING OF A PRESS FITTING, AND PRESSING TOOL FOR THIS PURPOSE
PROCÉDÉ DE COMPRESSION D'UN RACCORD DE COMPRESSION ET OUTIL DE PRESSE ASSOCIÉ

(30) Priorität: 22.08.2006 DE 102006039364; 20.10.2006 DE 102006050427
(43) Veröffentlichungstag der Anmeldung: 13.05.2009
(60) Teilanmeldung: 11181969.4
(73) Patentinhaber: Gustav Klauke GmbH, 42855 Remscheid (DE)
(72) Erfinder: FRENKEN, Egbert, 52525 Heinsberg (DE); WILSDORF, Frank, 42929 Wermelskirchen (DE); SCHMITZ, Michael, 57462 Olpe (DE); WASCHESZIO, Stefan, 42899 Remscheid (DE); MEYER, Ulrich, 42929 Wermelskirchen (DE)
(74) Vertreter: Müller, Enno
(86) Internationale Anmeldenummer: PCT/EP2007/058731
(87) Internationale Veröffentlichungsnummer: WO 2008/023035

(56) Entgegenhaltungen:
- EP-B- 1 455 969
- WO-A-98/57086
- WO-A1-00/12925
- DE-C1- 10 144 100
- DE-U1- 20 318 618
- DE-U1- 29 521 410
- JP-A- 4 248 090
- US-A- 4 850 621
- US-A- 5 484 174
- US-B1- 6 581 983

## Beschreibung

Die Erfindung betrifft zunächst ein Verfahren zum Verpressen eines Pressfittings mit einem in den Pressfitting eingesteckten Rohr mittels eines Presswerkzeuges, wobei der Pressfitting einen umlaufenden Wulst aufweist, in welchem ein O-Dichtring eingelegt ist, wobei das Rohr innerhalb des Pressfittings endet und im Bereich des Wulstes eine erste Verpressung durchgeführt wird, wobei weiter rohreinsteckseitig des Pressfittings mit Abstand zu dem Wulst eine weitere Verpressung durchgeführt wird, die zu einer abzugshemmenden, gleichsinnig verlaufenden Konizität von Pressfitting und Rohr führt und der Wulst im Zuge des Verpressens durch Beaufschlagung von radial außen und ausgehend von einem Scheitel des Wulstes beiderseits gleichmäßig axial verbreitert wird, wobei darüber hinaus die weitere Verpressung zur Auszugssicherung der verpressten Kombination aus Pressfitting und Rohr nur am Rohr einsteckseitigen Pressfittingende durchgeführt wird, ohne eine Pressbeaufschlagung des in Einsteckrichtung des Rohres betrachtet hinter dem Wulst sich erstreckenden Fittingabschnittes wie es aus der US 5,484,174 A bekannt ist, die bei welchem bekannten Verfahren jedoch ohne Ausbildung eines Konusabschnittes eine Verklinkung durchgeführt wird und keine Mittel zur axialen Ausrichtung hinsichtlich einer Stirnfläche des Pressfittings vorgesehen sind.

Bei derartigen Verfahren wird die notwendige Dichtigkeit der Verpressung von Rohr und Pressfitting wird durch die erste Verpressung im Bereich des Wulstes erreicht, bei welcher der in dem Wulst einliegende O-Dichtring durch die Beaufschlagung im Bereich des Wulstes mittels des Presswerkzeuges unter Verformung des Dichtringes gegen die zugeordnete, von dem Dichtring überfangene Mantelaußenwandung des Rohres gedrückt wird. Die Verformung des Dichtringes geht dabei einher mit einer Verformung des den Dichtring umgebenden Bereiches sowohl des Pressfittings als auch in der Regel des Rohres. Die zweite Verpressung, die durchaus gleichzeitig mit der ersten Verpressung durchgeführt wird, führt zu einer Auftulpung von Pressfitting und Rohr derart, dass sich eine entgegen der Abzugsrichtung sich aufweitende Konizität der Kombination von Pressfitting und Rohr ergibt, so dass eine Abzugshemmung nach dem Verpressvorgang erreicht ist.

Bei einem aus der WO98/57086 A1 bekannten Verfahren ist durch die erste Verpressung im Bereich des Wulstes die Dichtringverformung unter entsprechender Erhöhung der Dichtigkeit und zugleich die Abzugshemmung erreicht.

Bei einem aus der US 6 581 983 B1 bekannten Verfahren wird die Verpressung im Wulstbereich und beidseitig des Wulstes vorgenommen. Aus der US-A-4,850,621 ist eine ledigliche Steckverbindung von Rohren bekannt. Mit einem aus der DE-U1-29521410 bekannten Pressabschnitt lässt sich eine gleichsinnig verlaufende Konizität von Pressfitting und Rohr bei einer Verpressung erreichen.

Ausgehend von dem zunächst genannten Stand der Technik beschäftigt sich die Erfindung mit der Aufgabe, ein Verfahren zum Verpressen eines Pressfittings mit einem in den Pressfitting eingeschobenen Rohr mittels eines Presswerkzeuges anzugeben, dass auch bei schwierigen Einbaubedingungen günstig durchführbar ist und zu zuverlässigen Verpressungen führt.

Diese Aufgabe ist beim Gegenstand des Anspruches 1 gelöst. Insbesondere wird im Zuge des Verpressens durch Beaufschlagung von radial außen und ausgehend von einem Scheitel des Wulstes dieser beiderseits gleichmäßig verbreitert und zur axialen Ausrichtung an dem dem Konuspressabschnitt zugewandten Ende des Presswerkzeuges ein Anlagesteg zur Anlage an einer Stirnfläche des Pressfittings gebracht.

Es wird direkt auf den den Dichtring aufnehmenden Wulst Einfluss genommen, indem dieser von radial außen im Zuge des Verpressvorganges beaufschlagt wird, was bei entsprechender radialer Verringerung des Wulstdurchmessers eine axiale Verbreiterung des innenwandig durch den Wulst definierten Aufnahmeraumes für den Dichtring zur Folge hat. Entsprechend wird auch der eingelegte Dichtring angepasst verformt, zur Bildung einer vergrößerten druckbehafteten Abdichtfläche. Eine Pressbeaufschlagung des in Einschubrichtung des Rohres betrachtet hinter dem Wulst sich erstreckenden Fittingabschnittes, was beispielsweise in schwer zugänglichen Bereichen problembehaftet sein kann, ist nicht gegeben. So erweist sich das erfindungsgemäße Verfahren diesbezüglich von Vorteil, da eben nur direkt auf den Wulst Einfluss genommen werden muss und darüber hinaus eine sichere Ausrichtung durch Anlage des Anlagesteges an einer Stirnfläche des Pressfittings erreicht wird. Darüber hinaus ist weiter durch das vorgeschlagene Verfahren auch visuell eine korrekte Verpressung, insbesondere eine auf die eingelegte Dichtung eingewirkte Pressbeaufschlagung zu erkennen, dies durch die von außen erkennbare axiale Verbreiterung der Wulst. Der radiale Einfluss auf den Wulst im Zuge des Verpressvorganges kann beispielsweise zu einer axialen Verbreiterung der Wulst um das 1,5 bis 4-Fache, weiter bevorzugt um etwa das 2-Fache des ursprünglichen Axialmaßes des Wulstes führen.

Der Wulst wird im Zuge des Verpressens durch Beaufschlagung von radial außen abgeflacht. So ist der Wulst beispielsweise vor dem Verpressvorgang zur Aufnahme eines im Querschnitt kreisrunden Dichtringes formangepasst ausgebildet. Nach dem Verpressvorgang und dabei von radial außen auf den Wulst einwirkender Beaufschlagung wird dieser derart verformt, dass der an den kreisrunden Durchmesser des Dichtringes angepasste Wulstradius insbesondere in Bezug auf einen Querschnitt durch den Wulst im Scheitelbereich derart vergrößert wird, dass sich wulstaußenseitig eine visuell erfassbare Abflachung ergibt und wulstinnenseitig der Dichtring aus der ursprünglichen bevorzugten Kreisscheibenquerschnittsform sich in einen ovalförmigen Querschnitt verformt, wobei insbesondere zugewandt zum eingesteckten Rohr die anliegende Dichtfläche vergrößert ist. Die Abflachung des Wulstes durch radiale Beaufschlagung von außen führt zu der axialen Verbreiterung des Wulstes, die ausgehend vom Scheitel des Wulstes beidseitig gleichmäßig erreicht werden kann.

Die radiale Beaufschlagung des Wulstes von außen kann partiell an mehreren, gegebenenfalls in Umfangsrichtung gleichmäßig hintereinander angeordneten Bereichen erfolgen. Bevorzugt wird eine Ausgestaltung, bei welcher der Wulst mit einem Zylinderabschnitt am Presswerkzeug beaufschlagt wird, zur umfangsmäßig gleichmäßigen radialen Beeinflussung des Wulstes von außen, so dass entsprechend auch nach Durchführung des Verpressvorganges eine umfangsmäßig gleichmäßige, ununterbrochene Axialverbreiterung bzw, radiale Abflachung des Wulstes erreicht ist.

Die rohreinsteckseitige weitere Verpressung zur Schaffung der Abzugshemmung ist in einer bevorzugten Ausgestaltung des Erfindungsgegenstandes im Bereich eines mindestens dem 1,5-Fachen des Höhenmaßes oder mehr des unverpressten Wulstes entsprechenden Abstandes vom Wulst in Richtung auf das rohreinsteckseitige Fittingende hin durchgeführt, wobei weiter die Höhe des unverpressten Wulstes erfindungsgemäß definiert ist durch das radiale Abstandssmaß zwischen der unverpressten Fittinginnenwandung und dem radial äußeren Scheitelpunkt des unverpressten Wulstes. Der axiale Abstand der weiteren Verpressung zu dem Wulst kann dem 2-Fachen, dem 3- bis 10-Fachen des Höhenmaßes des Wulstes entsprechen, darüber hinaus weiter beispielsweise dem 3-Fachen oder 4-Fachen oder jedem Zwischenmaß insbesondere im Zehntelbereich, so beispielsweise dem 2,1- oder 3,7-Fachen des Höhenmaßes. Dieser axiale Abstand zwischen den Verpressbereichen kann darüber hinaus in axialer Richtung mit einem dem 5- bis 20-Fachen der Materialstärke des Pressfittings entsprechenden Abstand vorgesehen sein, so weiter beispielsweise mit einem dem 6- bis 7-Fachen, so auch beispielsweise einem 5,7- oder 6,3-Fachen des Materialstärkenmaßes, wobei weiter der axiale Abstand zwischen den Verpressbereichen sich jeweils auf eine axiale Mitte eines jeden Verpressbereiches bezieht.

An dem dem rohreinsteckseitigen Ende des Pressfittings abgewandten Ende des Wulstes wird mittels eines Lehrenabschnittes an dem Presswerkzeug eine Stabilisierung des Presswerkzeuges relativ zu der Rohrlängsachse durchgeführt. Dieser Lehrenabschnitt kann zudem dazu verwendet werden, eine axiale Verbreiterung des Wulstes in die zu dem rohreinsteckseitigen Ende abgewandten Seite hin zu verhindern. Entsprechend bietet der Lehrenabschnitt bei entsprechender Anordnung eine mit Bezug auf das rohreinsteckseitige Ende rückwärtige Wulstabstützung. Zudem ist hierdurch der zu verpressende Fitting in axialer Richtung im Zuge des Verpressvorganges fixiert. Einem Wandern desselben ist entgegengewirkt, so dass die den jeweiligen Zonen zugeordneten Verpressgeometrien gezielt einwirken können.

Bildung der Abzugsicherung wird in einer Weiterbildung des Erfindungsgegenstandes eine Kalibrierverpressung durchgeführt, welche in bevorzugter Ausgestaltung für eine Beibehaltung des zylindrischen Fittingabschnittes und darüber hinaus auch des in diesem Bereich überdeckten Rohrabschnittes zwischen der Zone der Wulstverpressung und der Zone der rohreinsteckseitigen Verpressung sorgt, auch wenn sich im Zuge der Verpressung zunächst ein in diesem Umfangsbereich einstellender Querschnitt abweichend von einer Kreisform einstellt.

Neben dem wulstseitig vorgesehenen Lehrenabschnitt ist eine weitere axiale Ausrichtung des Presswerkzeuges mit Hilfe eines an einer Stirnfläche des Pressfittings anliegenden Anlagesteges durchgeführt. Dieser Anlagesteg wirkt hierbei gegen die freie Stirnfläche des rohreinsteckseitigen Fittingendes. Zufolge dieser Ausgestaltung ist der Pressfitting im Zuge des Verpressvorganges in axialer Richtung zwischen dem gegen die freie Stirnkante anliegenden Anlagesteg und dem von diesem freien Ende aus betrachtet hinter dem Wulst anliegenden Lehrenabschnitt fixiert. Zur weiteren exakten Ausrichtung des Verpresswerkzeuges zu dem Pressfitting und dem eingeschobenen zu verpressenden Rohr ist auf der wulstabgewandten Seite des Anlagesteges weiter eine lehrenartige Umfassung des Rohres vorgenommen. Die hierzu entsprechend weiter vorgesehene Lehre tastet zumindest über einen Teilumfang des Rohres deren Außenwandung ab.

Weiter kann rohreinsteckseitig des Wulstes ein radial vorgespannter Pressabschnitt vorgesehen sein. Dieser Pressabschnitt kann im Zusammenwirkungsbereich mit dem Fitting stiftartig, beispielsweise in Form eines federbelasteten Tasters ausgebildet sein; alternativ auch in Art einer Lehre kreisabschnittförmig sich in Umfangsrichtung des Fittings erstreckend. Wesentlich ist hierbei, dass dieser Pressabschnitt im Pressmaul positioniert ist, das heißt in dem Bereich, der beim Pressvorgang unmittelbar auf den Fitting einwirkt. Ein solcher vorgespannter Pressabschnitt dient insbesondere als Zentrierhilfe beim Ansetzen des Presswerkzeuges auf einen zu verpressenden Fitting. Damit dieser beim Pressen nicht beschädigt wird, weicht der vorgespannte Pressabschnitt im Zuge der Verpressung und bei Erreichen bzw. Überschreiten der Vorspannkraft aus, zur Einpassung in die übrige Verpressgeometrie. Erst in einer solchen Endstellung wirkt dieser insbesondere nach radial innen vorgespannte und entsprechend nach radial außen ausweichende Pressabschnitt gegebenenfalls verpressend auf den Fitting ein, dies entweder als aktiver Bestandteil der Verpressgeometrie oder als passives Element, beispielsweise zur Bildung eines axial wirkenden Abstützrückens. So wirkt beispielsweise der vorgespannte Pressabschnitt im Bereich der Kalibrierverpressung, weiter beispielsweise in einem Übergangsbereich zwischen einem Kalibrierpressabschnitt und einem Wulstpressabschnitt. Die auf den Pressabschnitt wirkende Vorspannung wird beispielsweise durch eine Feder, weiter beispielsweise durch eine Zylinder-Druckfeder aufgebracht. Auch andere elastische Elemente sind diesbezüglich denkbar. Auch ist vorgesehen, dass es vor einem Radialausweichen des vorgespannten Pressabschnittes nicht zu einer plastischen Verformung des Fittings, insbesondere im unmittelbaren Kontaktbereich zu diesem Pressabschnitt kommt. Die Vorspannkraft (Federkraft) ist entsprechend so groß gewählt, dass über diese ein Ausrücken des Pressabschnitts nach radial innen in der verpressmäßig unbeeinflussten Stellung gesichert ist. Wiederum ist die Vorspannkraft geringer als die Verpresskraft, so dass der Pressabschnitt infolge der Verpressung und der damit einhergehenden plastischen Verformung der benachbarten Bereiche des Fittings nach radial außen ausweicht.

Die Erfindung betrifft des Weiteren ein Presswerkzeug zum Verpressen von Pressfittingen auf Rohren, wobei das Presswerkzeug mindestens zwei Pressbacken aufweist mit einer an einem in dem Pressfitting ausgebildeten Wulst angepassten ersten Verpressgeometrie zur Bildung eines Wulstpressabschnittes und einer zweiten hierzu axial beabstandeten Verpressgeometrie zur Bildung eines Konuspressabschnittes, wobei die mit einem größeren Durchmesser versehene erste Verpressgeometrie eine zylinderförmige Ausbildung aufweist, derart, dass eine Wulst zumindest in einer Richtung Raum belassen ist zur axialen Verbreiterung, wobei weiter die zweite Verpressgeometrie nur einseitig der ersten Verpressgeometrie ausgebildet ist und zur Auszugssicherung einer verpressten Kombination aus Pressfitting und Rohr dient und zwischen dem Wulstpressabschnitt und dem Konuspressabschnitt ein Kalibrierpressabschnitt ausgebildet ist, der hinsichtlich eines radialen Abstandes zwischen dem Wulstpressabschnitt und dem Konuspressabschnitt vorgesehen ist, wobei darüber hinaus der Konuspressabschnitt gegenüber dem Wulstpressabschnitt einen verringerten Radialinnenraum belässt und der Kalibrierpressabschnitt einen radialen Innenraum belässt, dessen Durchmesser maßlich zwischen dem des Konuspressabschnittes und des Wulstpressabschnittes liegt.

Presswerkzeuge der in Rede stehenden Art sind bekannt, so beispielsweise zur Herstellung von Rohrpressverbindungen gemäß der eingangs erwähnten WO 98/57086 A1. Auch in diesem Zusammenhang ist auf die US-A-5484174 hinzuweisen. Aus der DE 295 21410 U1 ist ein solches Presswerkzeug bekannt, bei dem der Wulstpressabschnitt gleichgerundet zu einem verpressenden Wulst eines Pressfittings ausgebildet ist, wobei auch ein Konuspressabschnitt vorgesehen ist, jedoch nicht sicher eine Ausrichtung des Presswerkzeuges relativ zum Fitting erreichbar ist

Um ein Presswerkzeug der in Rede stehenden Art insbesondere handhabungstechnisch bei weiterhin gegebener funktionaler Sicherheit der herzustellenden Pressverbindung günstig auszugestalten, ist der Gegenstand des Anspruches 6 vorgeschlagen.

Die zweite Verpressgeometrie ist nur einseitig der ersten Verpressgeometrie ausgebildet und dient zur Auszugssicherung einer verpressten Kombination aus Pressfitting und Rohr. Im Zuge des Verpressvorganges wird eine Umformung des Wulstes erreicht derart, dass dieser unter Verringerung des Radialmaßes sich in axialer Richtung verbreitert, dies weiter unter entsprechender Verformung des wulstinnenseitig aufgenommenen O-Dichtringes, welcher wiederum nach dem Verpressvorgang über eine entsprechend in axialer Richtung vergrößerte Anlagefläche dichtend gegen die Rohraußenwandung tritt. Die Verformung des Wulstes erfolgt hierbei durch eine direkte Radialbeaufschlagung von außen über die entsprechende Verpressgeometrie des Werkzeuges. Diese Geometrie kann so ausgeformt sein, dass die Verbreiterung des Wulstes mit Bezug auf einen Querschnitt durch den Wulst sich beidseitig einer Scheitelzone des Wulstes einstellt, so weiter beispielsweise gleichmäßig beidseitig. In einer bevorzugten Ausgestaltung ist die Verpressgeometrie so gebildet, dass die axiale Verbreiterung zumindest überwiegend nur in eine Richtung erfolgt, so weiter bevorzugt in Richtung auf das rohreinsteckseitige Ende des Pressfittings. Die Verpressung im Bereich des Wulstes und die damit einhergehende Beaufschlagung des einliegenden Dichtringes in die Dichtstellung ist zufolge der vorgeschlagenen Verpressgeometrie nach dem Verpressvorgang von außen sichtbar durch die veränderte Außengestalt des Wulstes. Entsprechend ist visuell eine Kontrolle eines ordnungsgemäß durchgeführten Verpressvorganges, insbesondere eines ordnungsgemäßen Verpressens in der Dichtzone gegeben. Eine günstige Ausrichtung des Werkzeuges lässt sich durch den an dem dem Konuspressabschnitt zugewandten Ende des Presswerkzeuges ausgebildeten Anlagesteg, zur Anlage an einer Stirnfläche eines Pressfittings, erreichen.

In einer Weiterbildung ist in der Verpressgeometrie ein radial vorgespannter Pressabschnitt vorgesehen, der im Zuge des Verpressens und Erreichen der Vorspannkraft zur Einpassung in die übrige Verpressgeometrie radial ausweicht, welcher Pressabschnitt insbesondere zur zentrierenden Wirkung beim Ansetzen des Presswerkzeuges stiftartig ausgebildet sein kann. Damit der Fitting beim Verpressen nicht durch diesen Pressabschnitt beschädigt wird, taucht dieser nach Überwinden der Vorspannkraft nach radial außen ab, wonach der dem Fitting zugewandte Stirnbereich des Pressabschnittes durchaus noch aktiv und/oder passiv in die Verpressung einwirken kann.

In der Verpressgeometrie kann ein radial vorgespannter Verpressabschnitt vorgesehen sein, der im Zuge des Verpressens und Erreichen der Vorspannkraft zur Anpassung an die übrige Verpressgeometrie radial ausweicht. Dieser Pressabschnitt kann im Zusammenwirkungsbereich mit dem Fitting stiftartig, beispielsweise in Form eines federbelasteten Tasters ausgebildet sein; alternativ auch in Art einer Lehre kreisabschnittförmig sich in Umfangsrichtung des Fittings erstreckend. Wesentlich ist hierbei, dass dieser Pressabschnitt im Pressmaul positioniert ist, das heißt in dem Bereich, der beim Pressvorgang unmittelbar auf den Fitting einwirkt. Ein solcher vorgespannter Pressabschnitt dient insbesondere als Zentrierhilfe beim Ansetzen des Presswerkzeuges auf einen zu verpressenden Fitting. Damit dieser beim Pressen nicht beschädigt wird, weicht der vorgespannte Pressabschnitt im Zuge der Verpressung und bei Erreichen bzw. Überschreiten der Vorspannkraft aus, zur Einpassung in die übrige Ver-Erst in einer solchen Endstellung wirkt dieser insbesondere nach radial innen vorgespannte und entsprechend nach radial außen ausweichende Pressabschnitt gegebenenfalls verpressend auf den Fitting ein, dies entweder als aktiver Bestandteil der Verpressgeometrie oder als passives Element, beispielsweise zur Bildung eines axial wirkenden Abstützrückens. Die auf den Pressabschnitt wirkende Vorspannung wird beispielsweise durch eine Feder, weiter beispielsweise durch eine Zylinder-Druckfeder aufgebracht. Auch andere elastische Elemente sind diesbezüglich denkbar. Auch ist vorgesehen, dass es vor einem Radialausweichen des vorgespannten Pressabschnittes nicht zu einer plastischen Verformung des Fittings, insbesondere im unmittelbaren Kontaktbereich zu diesem Pressabschnitt kommt. Die Vorspannkraft (Federkraft) ist entsprechend so groß gewählt, dass über diese ein Ausrücken des Pressabschnitts nach radial innen in der verpressmäßig unbeeinflussten Stellung gesichert ist. Wiederum ist die Vorspannkraft geringer als die Verpresskraft, so dass der Pressabschnitt infolge der Verpressung und der damit einhergehenden plastischen Verformung der benachbarten Bereich des Fittings nach radial außen ausweichten kann.

Die Verpressgeometrie lässt den Wulst zumindest in einer Richtung Raum zur Abflachung des Wulstes, dies erreicht durch radiale Beeinflussung auf den Wulst, wobei in einem Querschnitt des Wulstes betrachtet der angepasst an den Querschnittsdurchmesser des einliegenden Dichtringes definierte Wulstradius insbesondere im Scheitelbereich vergrößert wird, dies bis hin zu einem Radiusmaß, welches einem Mehrfachen des ursprünglichen Radiusmaßes entspricht, so dass sich letztlich sogar eine mantelaußenseitige ebenflächige Zylinderfläche im Scheitelbereich des Wulstes einstellen kann. Dies ist insbesondere erreicht durch einen Zylinderabschnitt, der die erste Verpressgeometrie gestaltet. Dieser Zylinderabschnitt ist in axialer Richtung betrachtet längenmäßig so gestaltet, dass der Raum zur axialen Verbreiterung des Wulstes gegeben ist.

An dem dem rohreinsteckseitigen Ende des Pressfittings abgewandten Ende des Wulstes ist ein Lehrenabschnitt an dem Presswerkzeug ausgebildet. Dieser Lehrenabschnitt dient in erster Linie zur Stabilisierung des Presswerkzeuges relativ zu der Rohrlängsachse, zufolge dessen auch im Zuge des Verpressvorganges einer Relativverlagerung des Pressfittings in Axialrichtung entgegengewirkt ist. In vorteilhafter Weise ist die erste Verpressgeometrie so ausgebildet, dass der Lehrenabschnitt die axiale Verbreiterung des Wulstes auf der dem rohreinsteckseitigen Ende abgewandten Seite des Wulstes hindert. Entsprechend bietet der Lehrenabschnitt im Zuge des Verpressvorganges eine rückwärtige Abstützung - einen Gegenhalter - für die erste Verpressgeometrie, so dass sich der durch die erste Verpressgeometrie von radial außen beaufschlagte Wulst nur in eine Richtung, nämlich in Richtung auf das rohreinsteckseitige Ende des Pressfittings hin axial verbreitern kann. Der Lehrenabschnitt ist weiter so gebildet, dass dieser lediglich der Stabilisierung bzw. Führung des Presswerkzeuges zu dem Pressfitting dient; jedoch keine Verpresskräfte im eigentlichen Sinne auf den Rohrfitting bzw. auf das eingesteckte Rohr überträgt. Dennoch ist der Lehrenabschnitt in einer bevorzugten Ausgestaltung so stabil ausgebildet, dass dieser die im Zuge der radialen Beaufschlagung des benachbarten Wulstes in Axialrichtung auf diesen einwirkenden Kräfte zur Rückhaltung der angestrebten Wulstverbreiterung in Richtung der Lehre störungsfrei aufnehmen kann. Die Hinderung des Wulstes an einer axialen Verbreiterung in Richtung auf das der Einsteckseite abgewandte Ende ist in einer alternativen Ausbildung durch an dem Lehrenabschnitt ausgebildete, in Richtung des Wulstes weisende Anlageelemente erreicht. Der Lehrenabschnitt wirkt entsprechend nicht unmittelbar auf den Wulst ein, sondern vielmehr mittelbar über die Anlageelemente. Über die Umfangslänge des Lehrenabschnitts können mehrere, bevorzugt gleichmäßig zueinander beabstandete Anlageelemente vorgesehen sein, weiter bevorzugt deren zwei, die in diametraler Gegenüberlage positioniert sind. Entsprechend ist eine Art punktweise Abstützung erreicht. Ein Anlageelement ist an einen Konturverlauf des Wulstes angepasst, weist beispielsweise eine einer Wulstflanke zugewandte Konusfläche auf. So kann weiter das Anlageelement zugewandt der Wulst kappenartig ausgeformt sein.

Die rohreinsteckseitige zweite Verpressgeometrie zur Bildung der Abzugssicherung ist bevorzugt in einem Bereich vorgesehen, der einen Abstand vom Wulst in Richtung auf das rohreinsteckseitige Fittingende aufweist, der mindestens dem 1,5-Fachen des Höhenmaßes oder mehr des unverpressten Wulstes entspricht. So ist beispielsweise in axialer Richtung betrachtet die zweite Verpressgeometrie zu der den Wulst beaufschlagenden ersten Verpressgeometrie um ein axiales Maß beabstandet, welches dem 2- bis 10-Fachen, weiter beispielsweise dem 4-, 5- oder 6-Fachen der radialen Wulsthöhe entspricht, so weiter auch beispielsweise dem 2,1-Fachen oder 3,9-Fachen bzw. 4,7-Fachen. Das axiale Abstandsmaß bezieht sich jeweils auf den in axialer Richtung betrachteten Mittenabschnitt der jeweiligen Verpressgeometrie.

Zwischen dem Wulstpressabschnitt des Presswerkzeuges und dem Konuspressabschnitt des Presswerkzeuges ist ein Kalibrierpressabschnitt ausgebildet, der hinsichtlich des radialen Abstandes zwischen dem Wulstpressabschnitt und dem Konuspressabschnitt vorgesehen ist, wobei weiter der Konuspressabschnitt gegenüber dem Wulstpressabschnitt einen verringerten Radialinnenraum belässt und der Kalibrierpressabschnitt einen radialen Innenraum belässt, dessen Durchmesser maßlich zwischen dem des Konuspressabschnittes und des Wulstpressabschnittes liegt, so weiter etwa in einem maßlichen Mittel dieser Durchmesser. Der Kalibrierpressabschnitt dient zur Kalibrierung des rohrabschnittförmigen Bereiches zwischen den Verpressabschnitten des Pressfittings, so dass sich in diesem Bereich auch nach einer Verpressung ein bevorzugt streng zylindrischer Fittingabschnitt ergibt. Hierzu weist der Kalibrierpressabschnitt einen Zylinderabschnitt auf, der insbesondere gegen Ende des fortgeschrittenen Verpressvorganges gegen den zugeordneten Wandungsabschnitt des Rohrfittings gegebenenfalls formkorrigierend wirkt.

Es ergibt sich ein in axialer Richtung betrachteter Übergangsabschnitt zwischen Wulstpressabschnitt und Kalibrierpressabschnitt. Dieser ist in seiner axialen Breite etwa entsprechend der axialen Breite des Konuspressabschnittes ausgebildet, wobei weiter die Breite des Konuspressabschnittes etwa dem Differenzmaß der Radien von Konuspressabschnitt und Kalibrierpressabschnitt entspricht. Der Übergangsabschnitt zwischen Kalibrierpressabschnitt und Konuspressabschnitt ist weiter bevorzugt nicht schlagartig, stufenartig ausgebildet, sondern vielmehr verrundet. Alternativ ist insbesondere bei Presswerkzeugen zur Verpressung von Fittingen mit kleinen Durchmessern das axiale Breitenmaß des Übergangsabschnittes geringer gewählt als das axiale Breitenmaß des Konuspressabschnittes. So entspricht die axiale Breite des Übergangsabschnittes beispielsweise dem 0,3- bis 0,7-Fachen, weiter beispielsweise dem 0,5-Fachen der axialen Breite des Konuspressabschnittes. In diesen Übergangsabschnitt ist in einer bevorzugten Ausgestaltung der radial vorgespannte Pressabschnitt im Verpresszustand eingespannt, bildet somit stirnseitig nach radial innen gewandt zumindest partiell den Übergangsabschnitt konturmäßig mit aus.

Es sind bevorzugt zwei sich diametral gegenüberliegende vorgespannte Pressabschnitte vorgesehen, deren freien nach radial innen weisenden Enden konisch geformt sind, zur Abstützung an der zugewandten Wulstflanke. Die hierzu gegenüberliegende Wulstflanke ist flankiert von dem Lehrenabschnitt bzw. von den am Lehrenabschnitt befestigten Anlageelementen. Sind solche Anlageelemente vorgesehen, so sind bevorzugt zwei derartige Elemente in diametraler Gegenüberlage angeordnet, dies weiter um 90° versetzt zu den vorgespannten Pressabschnitten. Die Wulst ist jedenfalls zur Zentrierung des Presswerkzeuges axial beidseitig erfasst.

Der Zylinderabschnitt des Wulstpressabschnittes weist eine axiale Länge auf, die einem Mehrfachen der axialen Länge des Konuspressabschnittes entspricht, so weiter bevorzugt eine der 2- bis 5-fachen Länge, weiter bevorzugt der 3-fachen oder auch der 2,4- oder 3,2-fachen Länge des Konuspressabschnittes. Die axiale Länge des Kalibrierpressabschnittes kann weiter der axialen Länge des Wulstpressabschnittes entsprechen, woraus resultiert, dass der Zylinderabschnitt des Kalibrierpressabschnittes eine axiale Länge aufweist, die einem Mehrfachen der axialen Länge des Konuspressabschnittes entspricht. Dieser wiederum weist eine axiale Länge auf, die einem 0,5- bis 5-Fachen der Wandstärke des Pressfittings entspricht, so weiter beispielsweise dem 1-Fachen oder dem 3- bis 4-Fachen, weiter dem 1,7- oder 4,2-Fachen der Wandstärke, wobei weiter bei einer beispielhaften Ausgestaltung zur Verpressung eines etwa einen Durchmesser von 4 Zoll aufweisenden Rohres die Wandstärke des Rohrfittings 2,5 mm beträgt, dies weiter unter Aufnahme eines O-Dichtringes mit kreisrundem Querschnitt mit 5 mm Durchmesser und entsprechender Radiusanpassung des Wulstes.

Zur axialen Ausrichtung an dem dem Konuspressabschnitt zugewandten Ende des Presswerkzeuges ist an einer Stirnfläche des Pressfittings anliegend ein Anlagesteg vorgesehen. Dieser wirkt zur Justage des Presswerkzeuges und zur Stabilisierung desselben im Zuge des Pressvorganges gegen die freie Stirnfläche des Rohrfittings am rohreinsteckseitigen Ende, zufolge dessen der Pressfitting zwischen diesem Anlagesteg und dem rückwärtig des Wulstes anliegenden Lehrenabschnitt axial gefesselt ist. Auf der wulstabgewandten Seite des Anlagesteges ist weiter ein zweiter Lehrenabschnitt vorgesehen, der radial von außen gegen die Mantelaußenfläche des Rohres tritt.

Der an dem dem rohreinsteckseitigen Ende des Pressfittings abgewandten Ende des Wulstes vorgesehene erste Lehrenabschnitt kann den Pressfitting partiell umschließend angeordnet sein, so weiter durch Bildung eines halbzylinderartigen Abschnitts. In bevorzugter Ausgestaltung ist auch der auf der wulstabgewandten Seite des Anlagesteges vorgesehene zweite Lehrenabschnitt halbzylinderartig gestaltet, wobei weiter gegebenenfalls beide Lehrenabschnitte nicht zwingend über den gesamten Verpressvorgang vollflächig über ihre innere Halbkreiskontur rückwärtig des Wulstes bzw. auf dem Rohr anliegen. Vielmehr kann beispielsweise zu Beginn des Verpressvorganges zur reinen Stabilisierung der Kombination von Pressfitting und Rohr in dem Presswerkzeug punktuelle Abstützungen, insbesondere diametral gegenüberliegende Abstützungen der Lehrenabschnitte vorgesehen sein, von welchen Abstützpunkten ausgehend im Zuge des Verpressvorganges die miteinander wirkenden Flächen von Lehrenabschnitt und Fittingabschnitt bzw. Rohrabschnitt in Umfangsrichtung aufeinander zu kommend zunehmen, so dass zum Ende des Verpressvorganges hin die Lehrenabschnitte, insbesondere der wulstseitige Lehrenabschnitt über dessen gesamte Umfangslinie anliegt.

Der erste, dem Wulst rückwärtig zugeordnete Lehrenabschnitt weist eine axiale Längserstreckung auf, die dem 1,5-Fachen oder mehr der Wandstärke des Pressfittings entspricht bzw. etwa dem 1- bis 3-Fachen der axialen Länge des Wulstpressabschnittes, woraus eine ausreichende Stabilität des Lehrenabschnittes resultiert. Entsprechend ist dieser weiter mit einer axialen Länge versehen, die einem Mehrfachen, so beispielsweise einem 2- bis 5-Fachen, bevorzugt etwa einem 3-Fachen der axialen Länge des Konuspressabschnittes entspricht.

In einer weiter bevorzugten Ausgestaltung ist vorgesehen, dass das Radialmaß des Kalibrierpressabschnittes gegenüber dem Radialmaß des Konuspressabschnittes um das 0,5-Fache oder mehr der Wandstärke des zu verpressenden Fittings zurückweicht. So entspricht dieses radiale Abstandsmaß zwischen den Pressflächen von Kalibrier- und Konuspressabschnitt in einer bevorzugten Ausgestaltung etwa der Fittingwandstärke. Schließlich ist vorgesehen, dass das Radialmaß des Wulstpressabschnittes gegenüber dem Radialmaß des Kalibrierpressabschnittes um das 0,1- bis 0,9-Fache der Wulsthöhe des unverpressten Fittings vergrößert ist. So entspricht beispielsweise das Radialversatzmaß zwischen den Pressflächen von Wulst- und Kalibrierpressabschnitt bei Presswerkzeugen zur Verpressung von Fittingen mit großen Durchmessern etwa dem 0,1-bis 0,4-Fachen, weiter etwa dem 0,2-Fachen der unverpressten Wulsthöhe, weiter etwa dem 0,5- bis 0,8-Fachen der Fittingwandstärke, während bei kleineren Fittingdurchmessern ein Radialversatz gewählt ist, der etwa dem 0,5- bis 0,8-Fachen, weiter etwa dem 0,6-Fachen der Wulsthöhe oder etwa dem 1,0- bis 2,0-Fachen, weiter etwa dem 1,5-Fachen der Fittingwandstärke entspricht.

Alle vorerwähnten Maße oder Maßbereiche bzw. Verhältnisse oder Verhältnisbereiche beziehen sich auf die angegebenen Werte sowie auf Zwischenwerte zwischen den Minimal- und Maximalwerten, so insbesondere auch weiter auf Zwischenwerte im Zehntelbereich, auch wenn diese jeweils nicht explizit in Einzelwerten aufgeführt sind.

Nachstehend ist die Erfindung anhand der beigefügten Zeichnung, welche lediglich zwei Ausführungsbeispiele darstellen, näher erläutert. Es zeigt:
- Fig. 1: eine perspektivische Ansicht eines erfindungsgemäßen Presswerkzeuges in Offenstellung, angesetzt an einen zu verpressenden Fitting mit eingeschobenem Rohr, eine erste Ausführungsform betreffend;

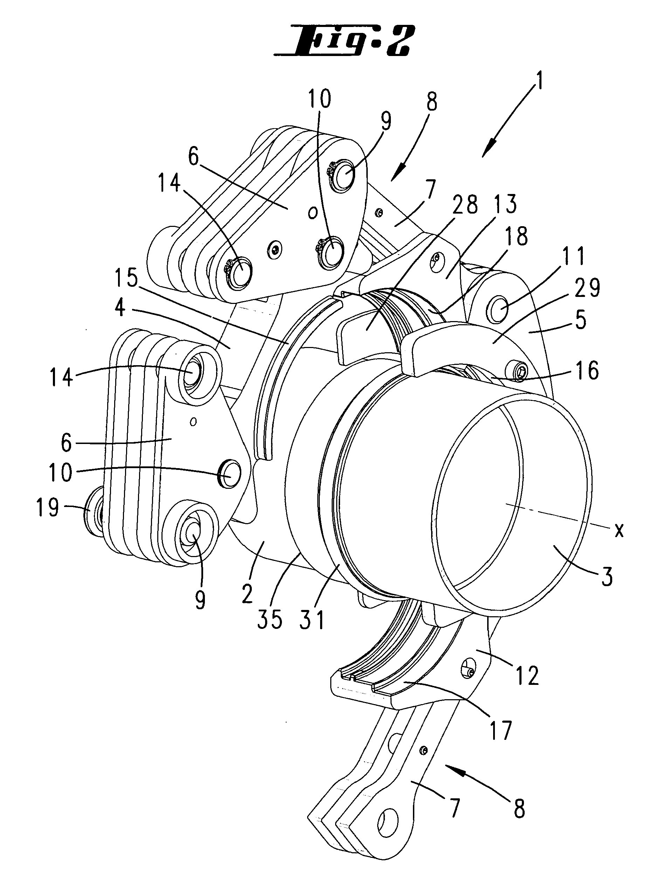

- Fig. 2: eine weitere perspektivische Ansicht gemäß der Situation in Fig. 1;
- Fig. 3: in perspektivischer Darstellung das Presswerkzeug in angesetztem, verpressbereiten Zustand, bei eingesetztem Fittings, jedoch unter Fortlassung des Rohres;

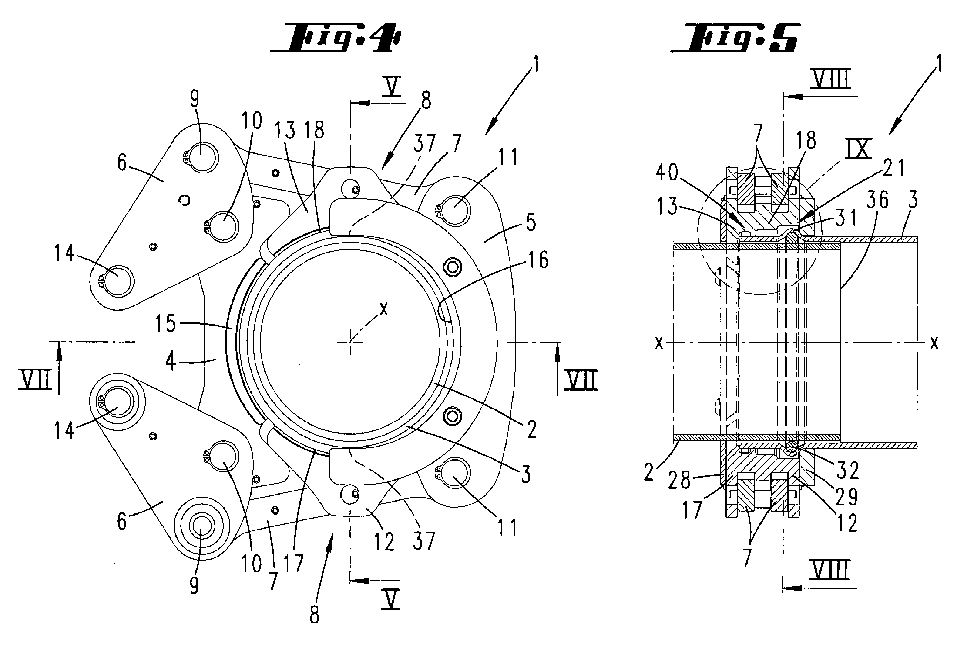

- Fig. 4: eine Seitenansicht gegen das Presswerkzeug mit eingelegtem Fitting und Rohr, unter Fortlassung der auf das Presswerkzeug zur Verpressung einwirkenden Vorrichtung;
- Fig. 5: den Schnitt gemäß der Linie V - V in Fig. 4;

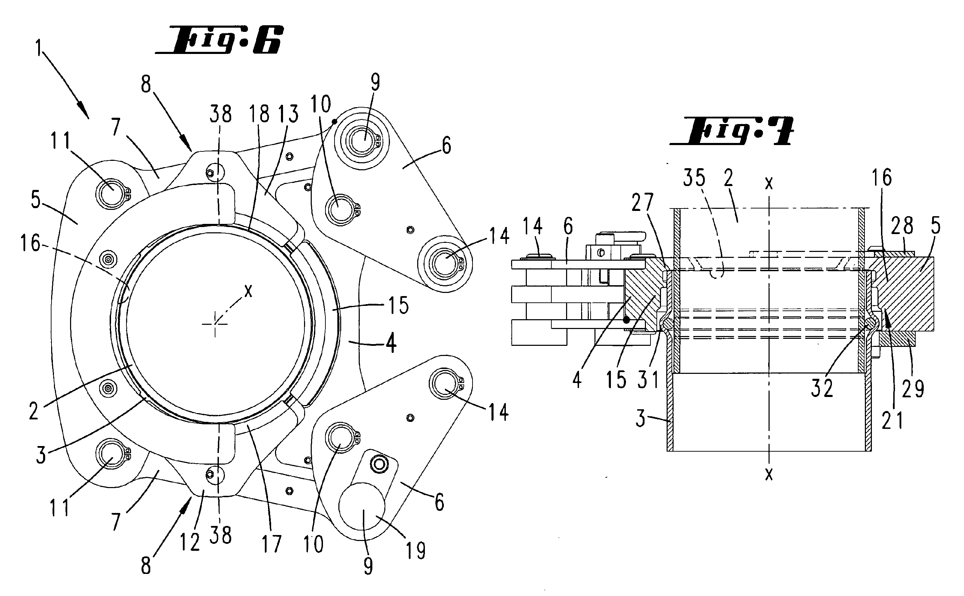

- Fig. 6: eine zu der Darstellung in Fig. 4 rückwärtige Ansicht gegen das Presswerkzeug;
- Fig. 7: den Schnitt gemäß der Linie VII - VII in Fig. 4;
- Fig. 8: den Schnitt gemäß der Linie VIII - VIII in Fig. 5;
- Fig. 9: die Herausvergrößerung des Bereiches IX in Fig. 5;

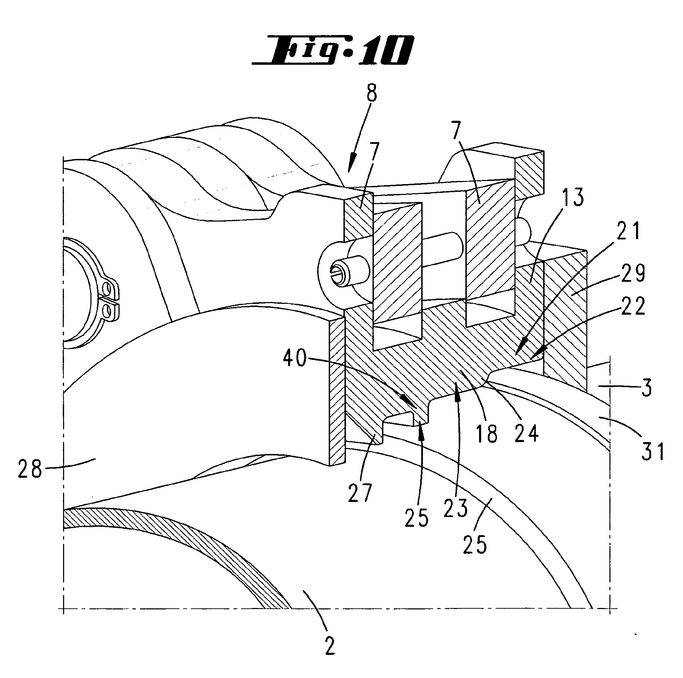

- Fig. 10: die Detaildarstellung gemäß Fig. 9 in perspektivischer Ansicht;

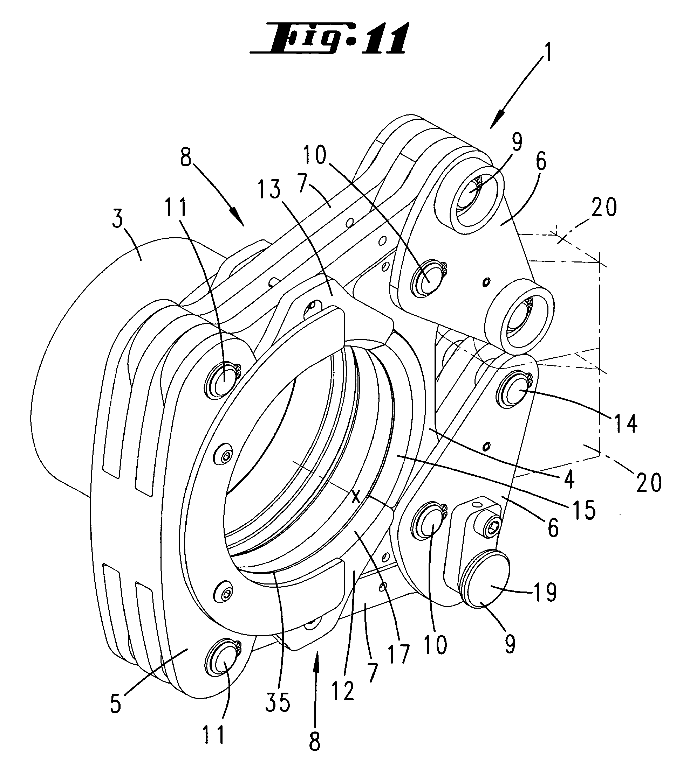

- Fig. 11: eine der Fig. 3 entsprechende perspektivische Darstellung, jedoch die Verpressstellung betreffend;
- Fig. 12: die vergrößerte Ausschnittdarstellung gemäß Fig. 9, betreffend die Verpressstellung;
- Fig. 13: in perspektivischer, partiell geschnittener Darstellung das Presswerkzeug in einer zweiten Ausführungsform, in angesetztem, verpressbereitem Zustand, bei eingesetztem Fitting, jedoch unter Fortlassung des Rohres;
- Fig. 14: eine der Fig. 4 entsprechende Ansichtsdarstellung, die zweite Ausführungsform betreffend;
- Fig. 15: den Schnitt gemäß der Linie XV - XV in Fig. 14;
- Fig. 16: den Schnitt gemäß der Linie XVI - XVI in Fig. 14;
- Fig. 17: die Herausvergrößerung des Bereiches XVII in Fig. 15;
- Fig. 18: die Herausvergrößerung des Bereiches XVIII - XVIII in Fig. 15;
- Fig. 19: die vergrößerte Ausschnittdarstellung gemäß Fig. 17, jedoch die Verpressstellung betreffend;
- Fig. 20: die vergrößerte Ausschnittdarstellung gemäß Fig. 18 in der Verpressstellung.

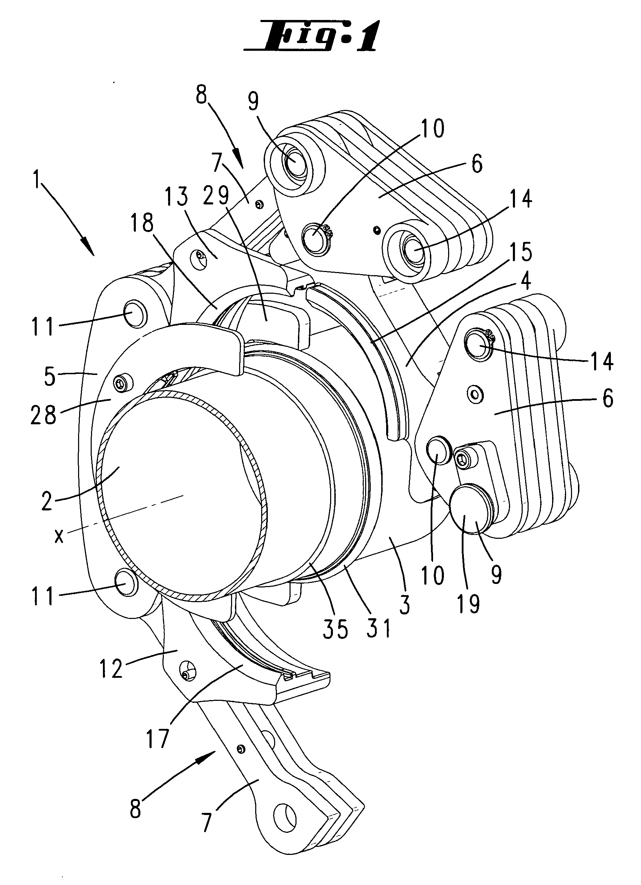

In Figur 1 ist in perspektivischer Darstellung eine erste Ausführungsform des erfindungsgemäßen Presswerkzeugs 1 mit darin eingesetzten, mit einander zu verpressenden rohrförmigen Werkstücken dargestellt. Bei diesen Werkstücken handelt es sich, wie in Verbindung mit den folgenden Figuren zu erkennen, um ein Rohr 2, das in einen Pressfitting 3 eingesteckt ist. Die Werkstücke weisen eine gemeinsame zentrale Längsachse x auf.

Bei dem Presswerkzeug 1 handelt es sich in dem dargestellten Ausführungsbeispiel um eine Art Presskette, wie sie beispielsweise aus der EP 1455969 B1 her bekannt ist. Der Inhalt dieser Patentschrift wird hiermit vollinhaltlich in die Offenbarung vorliegender Erfindung mit einbezogen, auch zu dem Zwecke, Merkmale dieses Patentes in Ansprüche vorliegender Erfindung mit einzubeziehen.

Das Presswerkzeug 1 der gezeigten Ausführungsform besteht aus vier Pressgliedern, die in Zusammenwirkung an dem Pressvorgang der Werkstücke beteiligt sind. Hierzu weist das Presswerkzeug 1 zunächst zwei einander in Umfangsrichtung gegenüberliegende Pressglieder 4, 5 auf, die zur Veränderung eines Pressquerschnittes zueinander mittels zweier jeweils einen als Winkelhebel ausgebildeten Gelenkhebel 6 und einen Gelenkhebel 7 aufweisender Kniehebel 8 zueinander verschiebbar sind. Ein Gelenkhebel 6 ist jeweils mittels eines Kniegelenks 9 mit einem Gelenkhebel 7 verbunden. Der Gelenkhebel 6 weist ein Außengelenk 10 auf, das mit dem Pressglied 4 verbunden ist.

Der Gelenkhebel 7 weist an seinem gegenüberliegenden Ende ein Außengelenk 11 auf, das mit dem Pressglied 5 verbunden ist. Angesichts der erkennbaren achsensymmetrischen Anordnung der beiden Kniehebel 8 sind dabei wie auch im Folgenden für einander entsprechende Elemente die gleichen Bezugszeichen gewählt. In dem jeweiligen Umfangswinkelbereich eines Gelenkhebels 7, der gegenüber dem Gelenkhebel 6 eine größere Länge aufweist, ist jeweils ein weiteres Pressglied 12, 13 vorgesehen, wobei einander die Pressglieder 12,13 bezüglich des Pressquerschnittes ebenfalls gegenüberliegen.

Die Pressglieder 4, 5 sind mit den Pressgliedern 12, 13 nicht mittels Gelenken verbunden, sondern lediglich verliersicher an den Gelenkhebeln 7 gehalten und mittels Gleitführungen an den Pressgliedern 4, 5 geführt. Dies bedeutet, dass die Pressglieder bereits vor Beginn des Pressvorgangs den Pressquerschnitt bzw. die zu verpressenden Werkstücke über den vollständigen Umfang hinweg regelmäßig umschließen.

Des Weiteren sind an Gelenkhebeln 6 Krafteinleitungselemente 14 vorgesehen zur Krafteinleitung außerhalb des Außengelenks. In dem dargestellten Ausführungsbeispiel weisen die Pressglieder 5,12 und 13 sowie die Gelenkhebel 6 jeweils drei parallel beabstandete Plattenbereiche mit dazwischen liegenden parallelen Fugen auf. Demgegenüber weisen das Pressglied 4 und die Gelenkhebel 7 jeweils zwei vergleichbare beabstandete Plattenbereiche auf, die in der Weise bemessen und beabstandet sind, dass ein Eingriff in die Fugen der Pressglieder 5, 12 und 13 sowie der Gelenkhebel und damit eine gegenseitige Durchdringung derselben ermöglicht ist. Hinsichtlich der Pressglieder 4, 5 und 12, 13 stehen die Plattenbereiche über Pressbacken 15, 16, 17 und 18 miteinander einstückig in Verbindung, wodurch eine stabile Ausgestaltung erhalten wird. Die erläuterten Gelenkverbindungen zwischen den Pressgliedern 4, 5 und den Gelenkhebeln 6, 7 sind durch einander in zusammengesetztem Zustand durchdringende endständige Bohrungen ausgeführt, durch die Zylinderstifte hindurchgesteckt und an ihren Enden durch Sicherungsringe gehalten sind. Bei dem gezeigten Ausführungsbeispiel ist vorgesehen, dass die Presskette an dem Kniegelenk 9 des oberen Kniehebels 8 geöffnet werden kann, indem ein Kupplungsbolzen 19 in eine Freigabestellung zu verlagern ist.

Der Verpressvorgang unter entsprechender Verringerung des Pressquerschnittes wird erreicht durch auf das Presswerkzeug 1 einwirkende, an einer nicht dargestellten hydraulisch wirkenden Pressvorrichtung angeordnete presszangenförmige Pressbacken 20, die Teil von in einer Spannvorrichtung drehbeweglich angeordneten Presshebeln sind. Die Pressbacken 20 sind formschlüssig mittels der Krafteinleitungselemente 14 mit den Gelenkhebeln 6 verbunden. Im Zuge eines Verpressvorganges wird rückwärtig der Pressbacken 20 auf die hebelseitigen Enden derart eingewirkt, dass die Pressbacken 20 sich zangenartig schließen, was eine Verringerung des Abstandes der Krafteinleitungselemente 14 zueinander zur Folge hat. Über eine Drehung der Gelenkhebel 6, 7 wird zur Verpressung der Pressquerschnitt im Bereich der Pressbacken 15 bis 18 verringert.

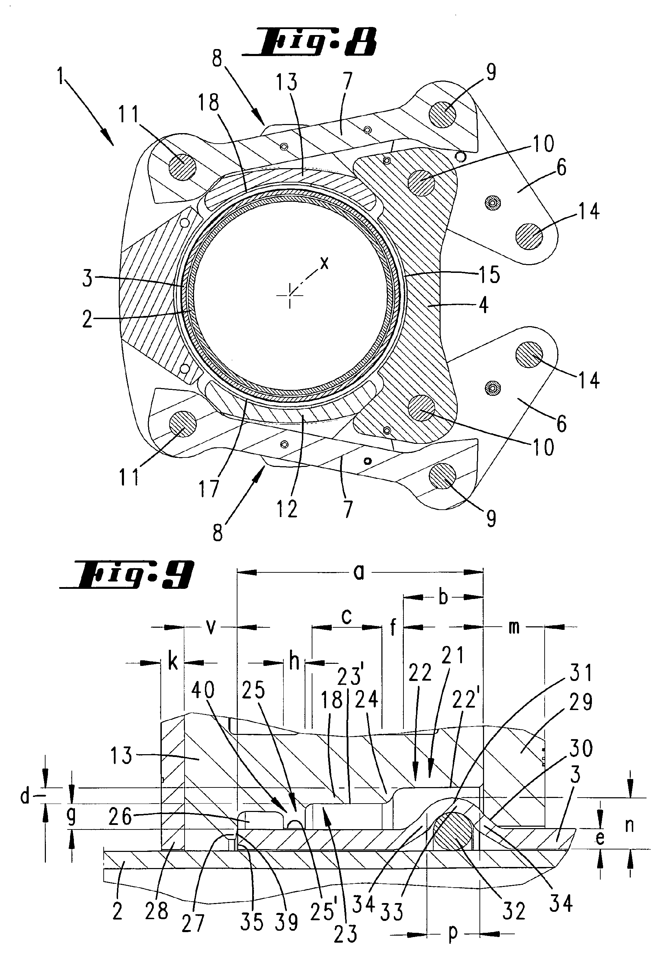

Die Pressbacken 15 bis 18 sind nach radial innen zugewandt den zu verpressenden Werkstücken gleich ausgebildet, zeigen entsprechend in einem Querschnitt gleiche Verpressgeometrien auf. Ein solcher Querschnitt durch eine Pressbacke ist in Figur 9 dargestellt.

Jede Pressbacke 15 bis 18 weist im Querschnitt gemäß der Darstellung in Figur 9 im Wesentlichen drei in axialer Ausrichtung der jeweiligen Pressbacke hintereinander angeordnete, unterschiedliche Abschnitte von Pressgeometrien auf, so zunächst ausgehend von einem axialen Ende des Backenquerschnittes eine erste Verpressgeometrie 21, die gebildet ist durch einen als Zylinderabschnitt ausgeformten Wulstpressabschnitt 22. Dieser erstreckt sich etwa über ein Drittel der gesamten in Ausrichtung der Achse x gemessene Länge a des auf den Pressfitting 3 einwirkenden gesamten Pressquerschnittes der Pressbacke 15 bis 18. So ist in dem dargestellten Ausführungsbeispiel bei einer gewählten axialen Länge a der auf den Pressfitting 3 wirkenden Gesamtpressgeometrie von etwa 30 mm eine in selbe Richtung gemessene Erstreckungslänge b des den Wulstpressabschnitt 22 formenden Zylinderabschnitts von etwa 10 mm gegeben.

In axialer Nebenanordnung zu dem Wulstpressabschnitt 22 ist etwa mittig der gesamten axialen Länge a der wirksamen Verpressgeometrie ein Kalibrierpressabschnitt 23 ausgeformt. Auch dieser ist gebildet durch einen Zylinderabschnitt, woraus in einem Querschnitt gemäß Figur 9 wie auch bei dem Wulstpressabschnitt 22 eine parallel zur Achse x verlaufende Pressbeaufschlagungswandung 22' bzw. 23' resultiert.

Der Kalibrierpressabschnitt 23 weist eine in axialer Richtung gemessene Länge c auf, die etwa der Länge b des Wulstpressabschnittes 22 entspricht. So ist auch der Kalibrierpressabschnitt 23 etwa mit einem Drittel der gesamten Länge a des wirksamen Pressquerschnittes versehen, so weiter in dem dargestellten Ausführungsbeispiel mit einer Länge c von etwa 10 mm.

Wie weiter insbesondere aus der Schnittdarstellung in Figur 9 zu erkennen, verlaufen die wirksamen Flächen 22' und 23' der Pressabschnitte 22 und 23 auf unterschiedlichen Radiuslinien. So ist der den Wulstpressabschnitt 22 ausformende Zylinderabschnitt mit einem gegenüber dem Zylinderabschnitt zur Bildung des Kalibrierpressabschnittes 23 größeren Durchmesser versehen. In dem dargestellten Ausführungsbeispiel entspricht das Radiusübermaß d zwischen den Flächen 23' und 22' etwa einem Fünftel einer axialen Erstreckungslänge b bzw. c der Pressabschnitte 22 bzw. 23. Weiter entspricht dieser Radiusüberstand d etwa der Materialstärke (Maß e) des zu verpressenden Fittings 3.

Das Presswerkzeug 1 bzw. die Pressbacken 15 bis 18 sind in dem dargestellten Ausführungsbeispiel ausgelegt zur Verpressung eines einen 4-Zoll-Durchmesser aufweisenden Rohres 2 und eines entsprechend bemessenen Fittings 3. Bei solchen 4-Zoll-Rohren weisen Fittinge 3 in der Regel eine Wandungsstärke e von etwa 2,5 mm auf.

Zwischen dem Wulstpressabschnitt 22 und dem Kalibrierpressabschnitt 23 ist in axialer Richtung betrachtet ein Übergangsabschnitt 24 ausgebildet. Dieser formt eine verrundete Stufe des Radiusüberganges zwischen den Flächen 22' und 23'. Die axiale Breite f dieses Übergangsabschnittes 24 entspricht etwa dem Radiusübermaß d zwischen den Flächen 22' und 23', ist weiter entsprechend der Materialstärke des zu verpressenden Fittings 3 angepasst, weist entsprechend in dem dargestellten Ausführungsbeispiel ein Maß f von etwa 2,5 mm auf.

Die Radialmaßdifferenz g zwischen den Pressflächen 23' und 25' von Kalibrierpressabschnitt 23 und Konuspressabschnitt 25 entspricht in diesem Ausführungsbeispiel etwa der Materialstärke e des Fittings 2, demnach etwa 2,5 bis 3 mm, während die Radialmaßdifferenz d zwischen den Pressflächen 22' und 23' von Wulstpressabschnitt 22 und Kalibrierpressabschnitt 23 etwa dem 0,2-Fachen der unverpressten Wulsthöhe n entspricht.

Auf der dem Wulstabschnitt 22 abgewandten Seite schließt sich an dem Kalibrierpressabschnitt 23 eine zweite Verpressgeometrie 40 in Form eines Konuspressabschnittes 25 an. Auch dieser ist nach radial Innen mit einer konzentrisch zur Achse x ausgerichteten Zylinderfläche 25' versehen. Der diese Beaufschlagungsfläche definierende Zylinderdurchmesser ist gegenüber dem die Fläche 23' des Kalibrierpressabschnittes 23 definierenden Durchmessers verkleinert, so etwa um das Maß der Materialstärke (Maß e) des zu verpressenden Fittings 3. So ist in dem dargestellten Ausführungsbeispiel eine Radiendifferenz g zwischen der Fläche 25' und der Fläche 23' von etwa 2,5 bis 3 mm gegeben, woraus eine radiale Differenz zwischen der Konuspressfläche 25' und der Wulstpressfläche 22' etwa im Bereich der doppelten Materialstärke resultiert.

Die axiale Breite h des Konuspressabschnittes 25 entspricht ebenfalls etwa der Materialstärke des Pressfittings 3, beträgt so in dem dargestellten Ausführungsbeispiel etwa 2,5 bis 3 mm. Der Konuspressabschnitt 25 ist etwa von der Fläche des Kalibrierpressabschnittes 23 ausgehend nach radial innen weisend stegartig ausgeformt, mit einem Axialmaß, das etwa dem radialen Vorsprungmaß gegenüber der Kalibrierfläche 23' entspricht.

Rückwärtig des Konuspressabschnittes 25 - mit Bezug zu dem Kalibrierpressabschnitt 23 - ist über die restliche Länge der insgesamt auf den Pressfitting 3 einwirkenden Pressgeometrie ein Ausweichraum 26 belassen. Dessen Zylinderwandung ist mit einem radialen Maß versehen, das etwa dem 0,75-Fachen des Radialdifferenzmaßes g zwischen der Konuspressfläche 25' und der Kalibrierpressfläche 23' entspricht.

Die Pressbacken 15 bis 18 gehen im Querschnitt einerends über die im Wesentlichen auf den Pressfitting 3 einwirkende Pressgeometrie hinaus, zur Bildung eines im Bereich des dem Konuspressabschnitt 25 abgewandten Endes des Ausweichraumes 26 ausgeformten Anlagesteges 27. Dieser greift radial nach innen über die durch die Konuspressfläche 25' definierte Ebene, zur Zusammenwirkung mit einer zugewandten, rohreinsteckseitigen Stirnfläche 35 des eingelegten Pressfittings 3.

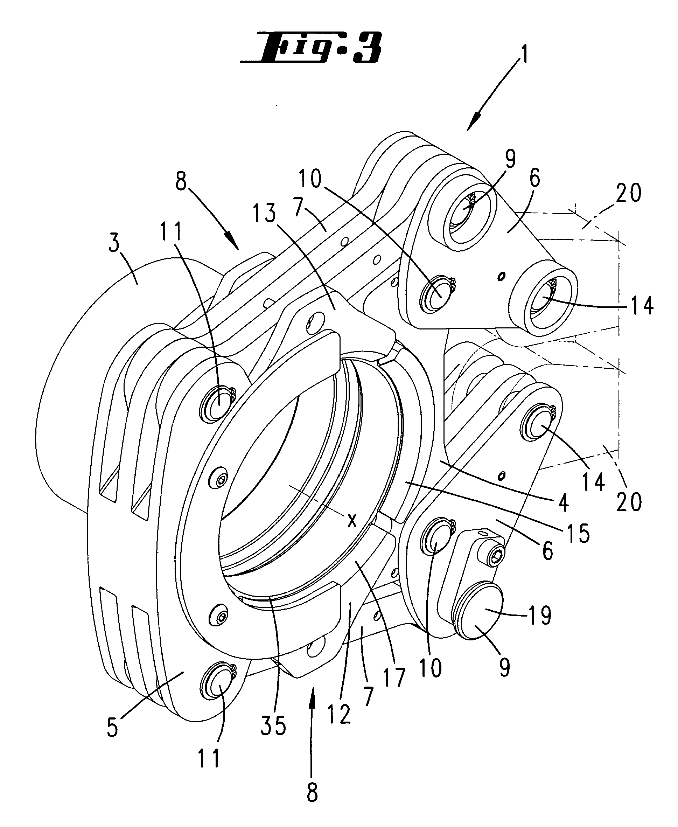

Auf der Wangenfläche des den Anlagesteg 27 ausformenden Backenabschnitts und entsprechend auf der wulstabgewandten Seite des Anlagesteges 27 ist ein Lehrenabschnitt 28 festgelegt. Dieser ist entgegen der dreiteiligen Ausgestaltung der Pressbacken einteilig gebildet, formt in einem Grundriss einen Halbkreisring. Dieser ist an dem Pressglied 5 befestigt, wobei die Halbkreisenden dieses Lehrenabschnittes 28 in der vorbereiteten Stellung gemäß Figur 3 über die Pressglieder 12 und 13 abschnittweise ragen.

Bei einer in Axialrichtung gemessenen Materialstärke k, die in dem dargestellten Ausführungsbeispiel mit 2,5 mm etwa der Materialstärke des Rohrfittings 3 entspricht, ist ein Innenradius des ringförmigen Lehrenabschnittes 28 vorgesehen, der dem Außendurchmesser des zu verpressenden Rohres 2 angepasst ist. Entsprechend liegt die zugewandte Stirnfläche des Lehrenabschnittes 28 sowohl in der Vorbereitungsstellung als auch in der Verpressstellung zumindest partiell auf dem zugewandten Mantelabschnitt des Rohres 2 auf, zur Stabilisierung und radialen Abstützung des Rohres 2.

Der axiale Abstand v des Lehrenabschnitts 28 zur Beaufschlagungsfläche des Anlagesteges 27 und somit in Verpresssituation zur abstützenden Stirnfläche 35 der Fittingwandung ist in dem dargestellten Ausführungsbeispiel etwa mit dem dreifachen Dickenmaß k des Lehrenabschnitts 28 bemessen. So beträgt das Abstandsmaß v in dem dargestellten Ausführungsbeispiel etwa 7,5 mm.

Auch anderendig der Gesamt-Verpressgeometrie, das heißt zugeordnet der dem Lehrenabschnitt 28 abgewandten Wangenfläche des Pressgliedes 5 ist ein weiterer Lehrenabschnitt 29 befestigt. Auch dieser ist in einem Grundriss halbkreisringförmig gestaltet mit sich über die Pressglieder 12 und 13 teilweise erstreckenden freien Enden. Entgegen dem Lehrenabschnitt 28 ist der Lehrenabschnitt 29 verdickt, weist entsprechend ein in Axialrichtung betrachtetes Maß m auf, das etwa dem Dreifachen des Dickenmaßes k des Lehrenabschnitts 28 entspricht, so weiter etwa dem dreifachen Maß der Materialstärke e des zu verpressenden Fittings 3.

Das Radialinnenmaß des Lehrenabschnitts 29 ist angepasst an das Durchmesseraußenmaß des zu verpressenden Fittings 3, so dass der Lehrenabschnitt 29 zumindest im Presszustand halbkreisförmig in Anlage zu dem zugeordneten Wandungsabschnitt des Fittings 3 tritt. Auch hierdurch ist zunächst eine radiale Stützung des Fittings 3 und auch des in dem Fitting 3 einliegenden Rohres 2 erreicht.

Wangeninnenseitig, das heißt zugewandt der Pressgeometrie, insbesondere dem Bereich des Wulstpressabschnittes 22 formt der Lehrenabschnitt 29 eine Konusfläche 30 aus. Über diese Konusfläche 30 stützt sich der Lehrenabschnitt 29 an einer zugewandten Flanke 34 eines an dem Fitting 3 ausgeformten, umlaufenden Wulstes 31 ab.

Der Wulst 31 des Pressfittings 3 dient zur Aufnahme eines innenliegend angeordneten O-Dichtringes 32, welcher bevorzugt aus einem gummiartigen bzw. gummiähnlichen Material besteht. Der Dichtring 32 ist im Querschnitt kreisscheibenförmig gebildet. Der Wulst 31 überdeckt im Querschnitt den Dichtring 32, wobei ein im Wesentlichen konzentrisch zu dem Mittelpunkt des Dichtringquerschnittes verlaufender Scheitelbereich 33 des Wulstes 31 in Axialrichtung des Fittings 3 betrachtet beidseitig in Flanken 34 übergeht, die in die Fittingzylinderwandung einlaufen.

Bei dem Pressfitting 3 kann es sich, wie in den Ausführungsbeispielen dargestellt, um einen Fitting handeln, der einerends ein Rohr 2 zum Verpressen aufnehmen kann, während andernends der Fitting 3 beispielsweise zur Verschweißung an ein weiteres Rohrstück oder dergleichen ausgebildet ist. Selbstverständlich ist das erfindungsgemäße Presswerkzeug 1 sowie das vorgeschlagene Verfahren auch an Fittingen 3 durchführbar, die beispielsweise muffenartig beidseitig endseitig mit Pressabschnittes ausgebildet sind, darüber hinaus auch Pressfittinge 3 in T-Form, bei denen ein Verpressen mit einem eingesteckten Rohr zufolge des erfindungsgemäßen Presswerkzeuges 1 an allen drei Rohraufnahmen des Fittings erfolgen kann, was insbesondere durch den geringen Bauraum des Werkzeuges auf der der Rohreinsteckseite des Fittings 3 gegenüberliegenden Seite des Wulstes 31 begründet ist.

In dem dargestellten Ausführungsbeispiel setzt sich der Wulst 31 in Axialrichtung betrachtet beidseitig in Fitting- Zylinderabschnitte fort, so zu einer Seite hin in Richtung einer der Aufnahme des Rohres 2 dienenden Öffnung. Die das rohreinsteckseitige Ende des Pressfittings 3 begrenzende Stirnfläche des Pressfittings 3 ist mit dem Bezugszeichen 35 versehen.

Der axiale Abstand des Wulstes 31 zur rohreinsteckseitigen Stirnfläche 35 ist angepasst an das axiale Erstreckungsmaß a der wirksamen Verpressgeometrie der Pressbacken 15 bis 18. Entsprechend liegt der Pressfitting 3 zur Verpressung derart in den Pressbacken ein, dass die Wulst 31 in dem Bereich des Wulstpressabschnittes 22 einliegt, dies unter Abstützung der dem Lehrenabschnitt 29 zugewandten Flanke 34 an der Konusfläche 30 des Lehrenabschnitts 29. Andernends in axialer Richtung findet eine axiale Abstützung zwischen der fittingseitigen Stirnfläche 35 und dem Anlagesteg 27 statt, zufolge dessen eine axiale Fixierung des zu verpressenden Fittings 3 in dem Presswerkzeug 1 erreicht ist.

Das Rohr 2 ist zur Verpressung in den Fitting 3 eingeschoben, dies anschlagbegrenzt, was durch eine mantelinnenwandige Stufe 36 in dem Fitting 3 erreicht ist. Der Innendurchmesser des Rohrfittings 3 und der Außendurchmesser des Rohres 2 sind einander angepasst, so dass das Rohr bereits im nicht verpressten Zustand kipp- und verkantsicher in dem Fitting 3 einliegt. In dem zwischen dem Wulst 31 und dem Rohraußenmantel erzielten Ringraum liegt die Dichtung 32 ein, die auch nach eingeschobenem Rohr 2 im Wesentlichen ihren kreisrunden Querschnitt behält.

Der Wulst 31 weist im unverpressten Zustand eine radiale Höhe n auf, die etwa dem 2,5- bis 3-Fachen der Wandungsstärke e des Fittings 3 entspricht, wobei die radiale Höhe n bestimmt ist durch das radiale Maß zwischen der Mantelinnenwandung des Fittings 3 und dem radial äußeren Scheitelpunkt des Wulstes 31.

Bei einem anhand eines 4-Zoll-Rohres 2 dargestellten Ausführungsbeispiel beträgt der Querschnittsdurchmesser des Ringes 32 etwa 5 mm, woraus sich eine in Achserstreckungsrichtung gemessene Wulstbreite p in der unverpressten Stellung ergibt, die etwa dem Dreifachen der Materialstärke des Fittings entspricht, so weiter in dem dargestellten Ausführungsbeispiel etwa 8 mm. Die diesem Maß zugrunde liegenden Messpunkte zur Definierung des Breitenmaßes p liegen gemäß der Darstellung in Figur 9 etwa im Umkehrpunkt vom kreisabschnittförmigen Scheitel 33 in die Flanken 34 des Wulstes 31.

Wie weiter aus der Darstellung in Figur 9 zu erkennen, erstreckt sich der Wulst 31 in Axialrichtung betrachtet unter Anliegen der Flanke 34 an dem Konus 30 nur über einen Teilbereich der axialen Erstreckungslänge des Wulstpressabschnittes 22, so weiter etwa über zwei Drittel dieser axialen Länge.

In der Verpressgrundstellung, das heißt bei bereits geschlossener Verpresskette liegen die Pressglieder 4, 5 und 12, 13 im Bereich der Konuspressabschnitte 25 mantelaußenseitig an dem Pressfitting 3 an, dies unter stirnseitiger Axialabstützung mittels des Anlagesteges 27 an der zugeordneten Stirnfläche 35 des Fittings 3.

Die beiden Lehrenabschnitte 28 und 29 liegen in dieser Grundstellung lediglich in den diametral gegenüberliegenden Endbereichen der halbkreisringförmigen Abschnitte etwa mittig der Umfangserstreckung der Pressglieder 12 und 13 an den zugeordneten Wandungsabschnitten an. Diese mehr punktförmige Anlage ist in den Darstellungen 4 und 5 mit den Bezugszeichen 37 und 38 bezeichnet, wobei mit 37 die Anlagezonen des Lehrenabschnittes 28 an dem Rohr 2 und mit 38 die Anlagezonen des Lehrenabschnittes 29 an dem Fitting 3 rückwärtig der Flanke 34 des Wulstes 31 bezeichnet sind.

Ausgehend von diesen Abstützstellen 37 bzw. 38 nimmt in der unverpressten Grundstellung die dem Werkstück zugewandte Bogenfläche des jeweiligen Lehrenabschnittes 28 bzw. 29 zur Mitte des Lehrenabschnittes hin zu, so dass gegenüberliegend zu den Krafteinleitungselementen 14 der maximale radiale Abstand zwischen Lehrenabschnitt und zugeordnetem Werkstück erreicht ist.

In dieser Stellung ist mittels der Lehrenabschnitte 28 und 29 eine Stabilisierung des Presswerkzeuges relativ zu der Rohrlängsachse x durchgeführt.

Im Zuge der Verpressung, bei welcher der Pressquerschnitt verringert wird, erfolgt entsprechend der Verlagerung des Pressgliedes 5 eine Linearverlagerung der Lehrenabschnitte 28 und 29, so dass diese im Zuge des Verpressvorganges eine umfangsmäßig vergrößerte Radialabstützung der zu verpressenden Werkstücke bieten.

Durch das Zusammenziehen der Pressbacken wird sowohl eine Verformung von Fitting 3 und Rohr 2 im Bereich des Konuspressabschnittes 25 als auch eine Verformung im Bereich des Wulstpressabschnittes 22 erreicht. Hierbei bewirkt die Druckbeaufschlagung des Wulstes 31 von radial außen durch die Zylinderfläche 22' des Wulstpressabschnittes 22 eine axiale Verbreiterung des Wulstes 31, dies resultierend durch eine Abflachung des Scheitels 33, sowie der Schenkel 34, woraus ein verpresstes Wulstbreitenmaß r resultiert, das etwa dem 1,5-Fachen des ursprünglichen Wulstbreitenmaßes p entspricht und weiter angepasst ist an die axiale Erstreckungslänge b des Wulstpressabschnittes 22. Hieraus resultiert weiter eine gegenüber der ursprünglichen radialen Wulsthöhe n reduzierte Wulsthöhe s um etwa das Maß der Materialstärke e des Fittings 3. Demzufolge ist auch der den Dichtring 32 aufnehmende Ringraum radial verringert, was eine Verformung des O-Dichtringes 32 in einen in Achsrichtung betrachteten langgestreckten Querschnitt zur Folge hat, dies einhergehend mit einer Vergrößerung der wirksamen Dichtflächen. Durch die rückwärtige Abstützung an dem Lehrenabschnitt 29 erfolgt die axiale Verbreiterung des Wulstes 31 nur in eine Richtung, nämlich in Richtung auf das rohreinsteckseitige Ende.

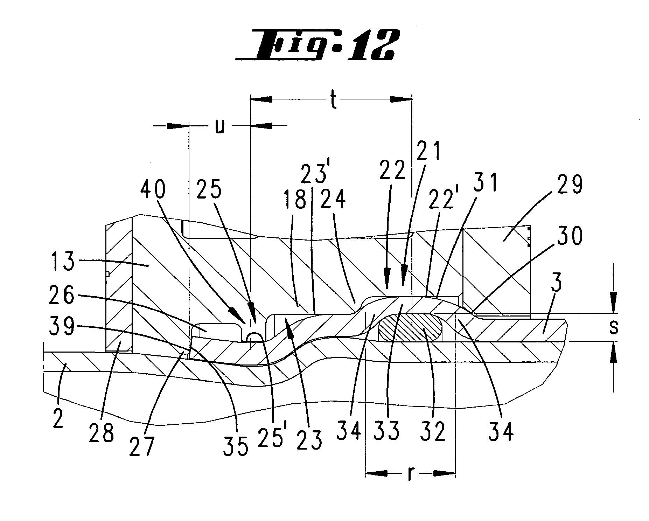

Der mit einem axialen Abstand t zum Wulstpressabschnitt 22 vorgesehene Konuspressabschnitt 25 (gemessen von den jeweiligen axialen Mittenbereichen der Abschnitte) bewirkt eine Umformung von Rohr 2 und Fitting 3 derart, dass sich eine Abzugssicherung einstellt. Dies ist durch einen im Schnitt gemäß der Darstellung in Figur 12 sich einstellenden V-förmigen Verlauf der Wandungsabschnitte erreicht. Zugewandt dem Wulstpressabschnitt 22 wirft der Konuspressabschnitt 25 sowohl rohrseitig als auch fittingseitig einen sich radial erweiternden Konusabschnitt auf, der im Bereich des Kalibrierpressabschnittes 23 in einen, wenngleich im Vergleich zu dem Kalibrierpressabschnitt 23 axial verkürzten zylinderförmigen Abschnitt übergeht. Der Kalibrierpressabschnitt 23 dient der Ausformung dieses zylinderförmigen Abschnittes, dies nicht durch Pressbeaufschlagung, sondern vielmehr durch Bildung einer Manschette, die einer Verformung abweichend von der Zylinderform entgegenwirkt.

Anderseitig der beschriebenen aufgeworfenen Konusform zur Abzugssicherung stellt sich zugewandt der rohreinsteckseitigen Stirnfläche 35 eine gleichfalls sich konisch aufstellende, zum rohreinsteckseitigen Ende hin sich erweiternde Form auf. Der sich hierbei aufstellende Endabschnitt des Fittings 3 taucht partiell in den Ausweichraum 26 ein, ohne jedoch die Abstützung an dem Anlagesteg 27 zu verlieren, welch letzterer zur Ermöglichung dieses radialen Aufwerfens mit einer entsprechenden Schrägflanke 39 versehen ist.

Der axiale Abstand zwischen dem axialen Mittenbereich des verpressten Wulstes 31 und der Umkehrzone der insgesamt V-förmig aufgeworfenen Mantelwandabschnitte des Fittings 3 entspricht dem vorbeschriebenen axialen Abstandsmaß t zwischen Wulstpressabschnitt 22 und Konuspressabschnitt 25. Der von diesem V-Scheitel der aufgeworfenen Mantelwandabschnitte gemessene axiale Abstand u zur Stirnfläche 35 entspricht in dem dargestellten Ausführungsbeispiel etwa dem 0,4-Fachen des Axialmaßes t, so weiter etwa dem Dreifachen der Materialstärke e des Fittings 3.

Das dargestellte und beschriebene Ausführungsbeispiel zeigt ein Presswerkzeug 1 in Form einer Presskette. Insbesondere für kleinere Rohr- und Fittingdurchmesser können jedoch auch Presswerkzeuge zur Anwendung kommen, die zangenartig wirkend mit zwei halbschalenförmigen Pressbacken, die die vorbeschriebene Pressgeometrie aufweisen, versehen sind.

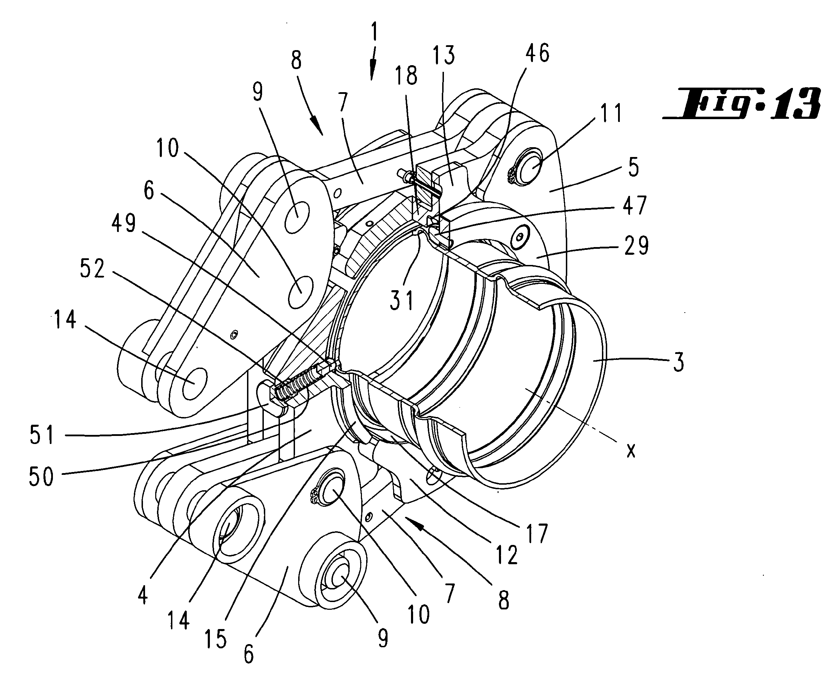

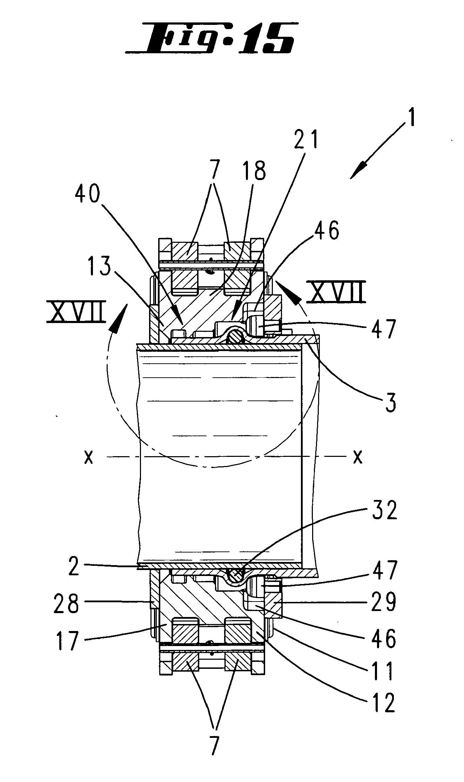

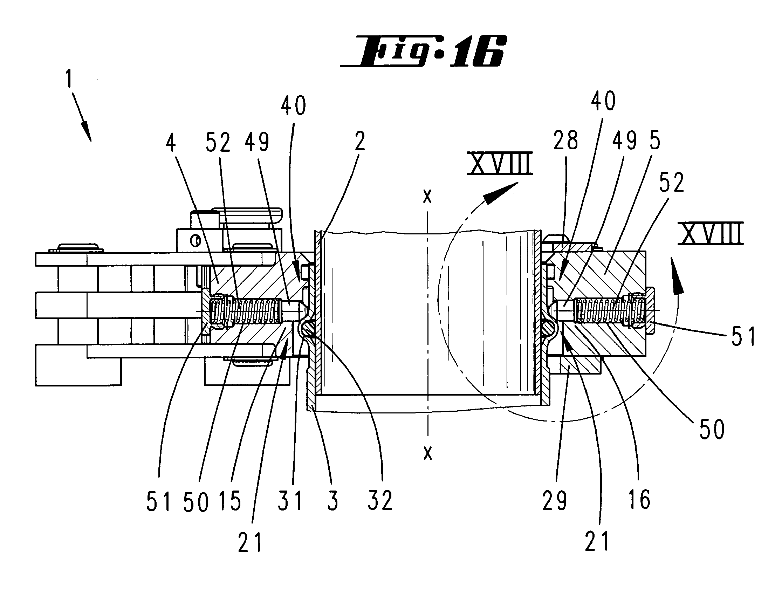

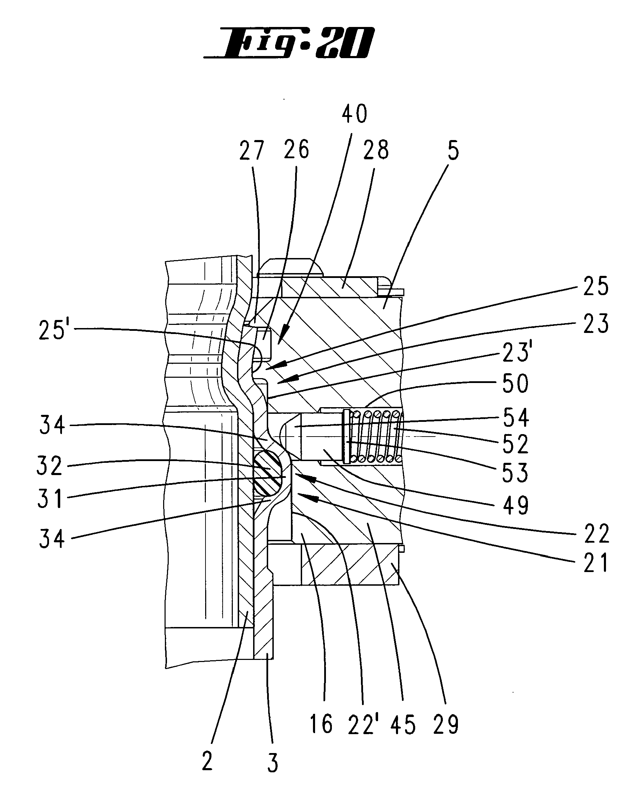

Die Figuren 13 bis 20 zeigen eine zweite Ausführungsform des erfindungsgemäßen Presswerkzeuges 1, welches gleich der ersten Ausführungsform vier Pressglieder aufweist, die in Zusammenwirkung an dem Pressvorgang der Werkstücke beteiligt sind, so weiter in Art einer Presskette.

Der grundsätzliche Aufbau dieses Presswerkzeuges 1 der zweiten Ausführungsform entspricht im Wesentlichen dem des zuvor beschriebenen Ausführungsbeispieles, weshalb gleiche Bauteile, Bauteilgruppen bzw. Abmaße gleiche Bezugszeichen tragen.

Das Presswerkzeug 1 der zweiten Ausführungsform ist ausgelegt zur Verpressung von Fittingen 3 und Rohren 2 kleineren Durchmessers, so beispielsweise mit einem Durchmesser von 1,5 Zoll. Die nachstehenden konstruktiven Lösungen sind jedoch auch übertragbar auf Presswerkzeuge 1 zum Verpressen von Fittingen 3 und Rohren 2 vergrößerten Durchmessers, wie beispielsweise anhand des ersten Ausführungsbeispieles beschrieben.

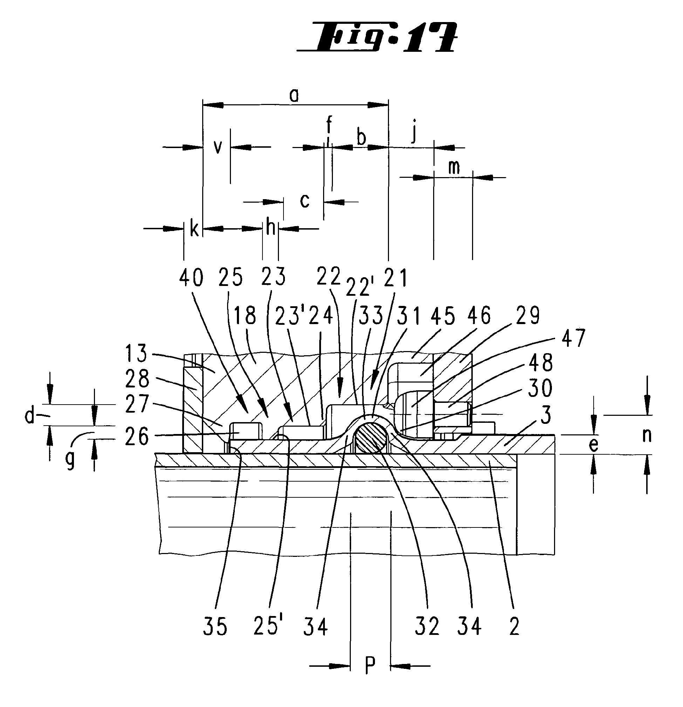

Die Pressbacken 15 bis 18 des Presswerkzeuges 1 gemäß zweiter Ausführungsform sind gegenüber denen der ersten Ausführungsform über das Axialmaß a der Gesamtpressgeometrie verlängert. Dies ist beispielhaft in Figur 17 anhand der Pressbacke 18 beschrieben, wobei, wie auch in der ersten Ausführungsform, die diesbezüglich beschriebenen Verpressgeometrien an allen Pressbacken ausgeformt sind.

Die Pressbacke 18 der zweiten Ausführungsform ist in Axialrichtung betrachtet seitlich flankiert von den Lehrenabschnitten 28 und 29. Wie auch in dem ersten Ausführungsbeispiel ist die zweite Verpressgeometrie 40 unmittelbar benachbart zu dem Lehrenabschnitt 28, an welche zweite Verpressgeometrie sich in Axialrichtung die erste Verpressgeometrie 21 anschließt. Zwischen der ersten Verpressgeometrie 21 und dem dem freien Fittingende abgewandten Lehrenabschnitt 29 ist ein Pressbackenabschnitt 45 belassen. Dieser weist eine axiale Länge j auf, die etwa der axialen Länge c des Kalibrierpressabschnittes 23 entspricht.

Gegenüber dem benachbarten Wulstpressabschnitt 22 ist der erweiterte Pressbackenabschnitt 45 partiell radial vergrößert, so weiter etwa um das Radiusübermaß d zwischen den Pressflächen 23' und 22' des Kalibrierpressabschnittes 23 und des Wulstpressabschnittes 22, welches Radiusübermaß d in dieser Ausführungsform etwa dem 1,5-Fachen der Materialstärke e des zu verpressenden Fittings 3 entspricht. Des Weiteren entspricht das Radialübermaß d etwa dem 0,5-Fachen der in radialer Richtung gemessenen Wulsthöhe n im unverpressten Zustand.

Der sich an den Wulstpressabschnitt 22 in Richtung auf den Lehrenabschnitt 29 anschließende Pressbackenabschnitt 45 ist nicht in die Verpressgeometrie eingebunden; wirkt entsprechend im Zuge des Verpressvorganges nicht formend auf den Fitting 3 ein.

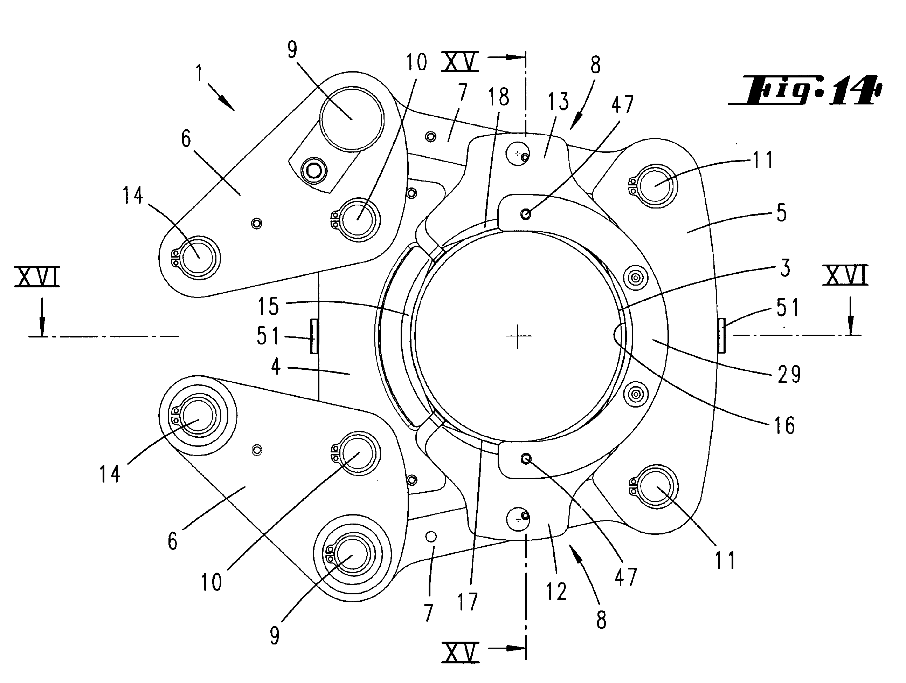

Die Radialerweiterung im Bereich des Pressbackenabschnittes 45 ist nicht über die gesamte Umlauflänge dieses Abschnittes 45 vorgesehen, sondern vielmehr mit Bezug auf das gesamte Presswerkzeug 1 lediglich in zwei diametral gegenüberliegenden Bereichen, nämlich konkret mittig der Umlauferstreckungen der Pressglieder 12 und 13 bzw. der Pressbacken 17 und 18, so weiter in Form von axial von dem Lehrenabschnitt 29 ausgehenden, bohrungsartigen Taschen 46. Diese sind zu ihrer Öffnungsseite hin überdeckt von dem flankierenden Lehrenabschnitt 29, der auch in dieser Ausführungsform gemäß der Darstellung in Figur 14 in einem Grundriss annähernd halbkreisringförmig gestaltet ist.

Der Lehrenabschnitt 29 trägt zugewandt dem Pressbackenabschnitt 45, weiter zugeordnet den Taschen 46 Anlageelemente 47. Diese sind mit einer axialen Tiefe versehen, die etwa dem 0,8-Fachen der in selber Richtung gemessenen Länge j des Pressbackenabschnittes 45 entspricht. Die zwei diametral sich gegenüberliegenden Anlageelemente 47 sind zunächst stiftartig ausgebildet, mit einem in dem Lehrenabschnitt 29 gehalterten Sockel 48. Dieser Sockel 48 trägt einen diesem gegenüber durchmesservergrößerten Kappenabschnitt, der zum freien Ende gewandt eine umlaufende, an die Wulstflanken 34 angepasste Konusfläche 30 besitzt. Die Anordnung und Ausgestaltung der Anlageelemente 47 ist so gewählt, dass in einer zur Verpressung vorbereiteten Stellung gemäß der Darstellung in Figur 17 die Konusfläche 30 des jeweiligen Anlageelements 47 sich gegen die dem freien Fittingende abgewandte Wulstflanke 34 abstützt und so die Funktion der Konusfläche 30 des Lehrenabschnittes 29 gemäß der ersten Ausführungsform übernimmt.

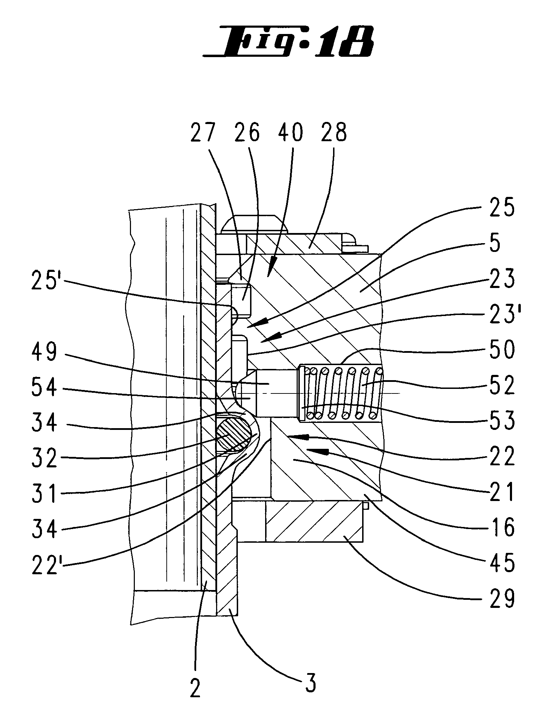

Über den Umfang der Pressbacke 18 bzw. der gegenüberliegenden Pressbacke 17 betrachtet ist außerhalb der Taschen 46 der jeweilige Pressbackenabschnitt 45 radialmäßig so gewählt, dass dessen radial innere Fläche mit der Pressfläche 22' des Wulstpressabschnittes 22 zusammenfällt. Dies gilt für die Pressbacken 15 und 16 über deren jeweiligen gesamten Umfangsabschnitt (vgl. Figur 18).

In Umfangsrichtung betrachtet mittig besitzen die Pressglieder 4 und 5 im Bereich ihrer Pressbacken 15 und 16 jeweils einen radial vorgespannten Pressabschnitt 49 in Form eines stiftartigen, nach radial innen federbelasteten Elements.

Dieser Pressabschnitt 49 ist in Axialrichtung betrachtet im Bereich des Übergangsabschnittes 24 zwischen dem Kalibrierpressabschnitt 23 und dem Wulstpressabschnitt 22 positioniert. Hierzu ist eine Radialbohrung 50 vorgesehen, die nach radial außen durch Kappen 51, beispielsweise Schraubkappen abgedeckt sind. Nach radial innen verjüngt sich die Bohrung 50 und läuft offen in den Pressraum aus.

In der Bohrung 50, konkret in dem durchmesservergrößerten Bereich liegt jeweils eine Druckfeder 52 ein, die den Pressabschnitt 49 nach radial innen beaufschlagt. Hierzu weist der Pressabschnitt 49 einen gegenüber dem frei nach radial innen ausragenden Abschnitt durchmesservergrößerten Tellerabschnitt 53 auf. Dieser liegt durchmesserangepasst in der Bohrung 50 ein. Auf diesen Teller wirkt die Druckfeder 52, welcher Teller 52 zugleich anschlagbegrenzend wirkt.

Jeder Pressabschnitt 49 ist als Kreiszylinder gebildet mit einer konisch ausgeformten Spitze 54, wobei der Konuswinkel angepasst ist an den Winkel einer zugewandten Wulstflanke 34. Der Durchmesser eines jeden Pressabschnittes 49 entspricht in dem dargestellten Ausführungsbeispiel etwa einem 1,2-Fachen der axialen Länge c des Kalibrierpressabschnittes 23.

Zur Vorbereitung eines Verpressvorganges wird der Fitting 3 samt dem Rohr 2 entsprechend der ersten Ausführungsform in das Presswerkzeug 1 eingesetzt, wonach über die zwei lehrenseitigen Anlageelemente 47 und die zwei hierzu um 90° in Umfangsrichtung versetzt angeordneten vorgespannten Pressabschnitte 49 eine Zentrierung des Presswerkzeuges 1 zum Fitting 3, insbesondere zum Wulst 31 erreicht ist. Durch die nach radial innen federbelasteten Pressabschnitte 49 wird über die Anlage an der zugeordneten Wulstflanke 34 die Wulst 31 bzw. die gegenüberliegende Wulstflanke 34 gegen die Konusflächen 30 der Anlageelemente 47 gedrängt, was eine Selbstzentrierung zur Folge hat.

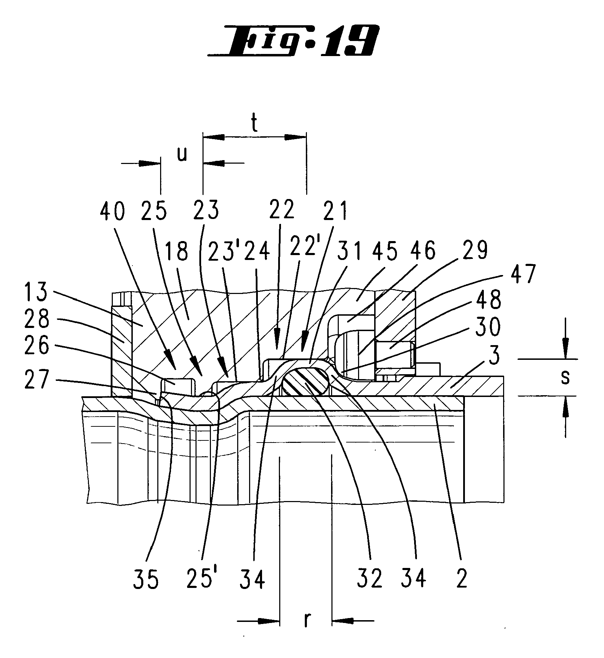

Auch bei dieser Ausführungsform wird im Zuge der Verpressung durch das Zusammenziehen der Pressbacken sowohl eine Verformung von Fitting 3 und Rohr 2 im Bereich des Konuspressabschnittes 25 als auch eine Verformung im Bereich des Wulstpressabschnittes 22 erreicht. Hierbei bewirkt die Druckbeaufschlagung des Wulstes 31 von radial außen durch die Zylinderfläche 22' des Wulstpressabschnittes 22 eine axiale Verbreiterung des Wulstes 31, dies resultierend durch eine Abflachung des Scheitels 33, sowie der Schenkel 34, woraus hier ein verpresstes Wulstbreitenmaß r (vgl. Figur 19) resultiert, das etwa dem 1,3-Fachen des ursprünglichen Wulstbreitenmaßes p entspricht. Der den Dichtring 32 aufnehmende Ringraum ist radial verringert, was eine Verformung des O-Dichtringes 32 in einen in Achsrichtung betrachteten langgestreckten Querschnitt zur Folge hat, dies einhergehend mit einer Vergrößerung der wirksamen Dichtfläche.

Auch die Umformung von Rohr 2 und Fitting 3 im Bereich des Konuspressabschnittes 25 ist entsprechend der Verformung gemäß dem ersten Ausführungsbeispiel gestaltet.

Die in dem Lehrenabschnitt 29 befestigten, in Richtung auf den Wulst 31 weisenden Anlageelemente 47 bewirken zumindest partiell eine Verformung des Wulstes 31 im Zuge des Verpressvorganges nur in Richtung auf das freie Einführende des Fittings 3 gemäß der entsprechenden Abstützung des Wulstes 31 an der Konusfläche 30 des Lehrenabschnittes 29 im ersten Ausführungsbeispiel.

Die federbelasteten Pressabschnitte 49 tauchen im Zuge des Verpressvorganges unter Überwindung der rückwärtig auf sie einwirkenden Federkraft nach radial außen in die Bohrung 50 ein. Diese Radialverlagerung der Pressabschnitte 49 erfolgt vor einem Verpressen des unmittelbar mit diesen Pressabschnitten 49 zusammenwirkenden Bereiches, um eine Beschädigung des Fittings 3 und/oder des Rohres 2 zu vermeiden. Die Federkraft der jeweiligen Druckfeder 52 ist hierbei so gezählt, dass die Spitze 54 eines jeden Pressabschnitts 49 stets in Kontakt steht mit der zugewandten Flanke 34 des Wulstes 31, wobei jedoch weiter durch die axiale Verbreiterung des Wulstes 31 im Zuge der Verpressung auch über die Wulstflanke 34 eine Radialkomponente auf dem zugeordneten Pressabschnitt 49 nach radial außen einwirkt. Durch die Pressabschnitte 49 ist die gewünschte Zentrierung von Presswerkzeug 1 und der Rohr-/Fitting-Anordnung auch während des Verpressvorganges gegeben.

Bedingt zum Einen durch den gewählten, relativ großen Zylinderdurchmesser der Pressabschnitte 49, weiter aber auch bedingt durch die zumindest in Richtung auf das Einsteckende des Fittings 3 betrachtete, etwa über den halben Umfang des Pressabschnittes 49 erreichte vollflächige Abstützung an der Bohrlochwandung über den gesamten Verpressvorgang ist eine ausreichende Abstützung der Pressabschnitte 49 geschaffen. Die im Zuge des Verpressvorgangs über den sich axial erweiternden Wulst 31 nicht nur mit Bezug auf die Fittingachse radial sondern auch axial auf den Pressabschnitt 49 einwirkenden Kräfte können so stets über eine große Fläche in die massive Pressbacke 17 bzw.18 abgeleitet werden. Entsprechend wirken auf die Pressabschnitte 49 keine oder vernachlässigbar kleine Scherkräfte ein.

## Patentansprüche

1. Verfahren zum Verpressen eines Pressfittings (3) mit einem in den Pressfitting (3) eingesteckten Rohr (2) mittels eines Presswerkzeuges (1), wobei der Pressfitting (3) einen umlaufenden Wulst (31) aufweist, in welchen ein O-Dichtring (32) eingelegt ist, wobei das Rohr (2) innerhalb des Pressfittings (3) endet und innerhalb des Wulstes (31) eine erste Verpressung durchgeführt wird, wobei weiter am rohreinsteckseitigen Pressfittingende mit Abstand zu dem Wulst eine weitere Verpressung durchgeführt wird, die zufolge eines Konuspressabschnittes an dem Presswerkzeug zu einer gleichsinnig verlaufenden Konizität von Pressfitting (3) und Rohr (2) führt und der Wulst (31) im Zuge des Verpressens durch Beaufschlagung von radial außen und ausgehend von einem Scheitel des Wulstes beiderseits gleichmäßig axial verbreitert wird, wobei darüber hinaus die weitere Verpressung zur Auszugssicherung der verpressten Kombination aus Pressfitting (3) und Rohr (2) nur am rohreinsteckseitigen Pressfittingende durchgeführt wird, ohne eine Pressbeaufschlagung des in Einsteckrichtung des Rohres betrachtet hinter dem Wulst sich erstreckenden Fittingabschnittes und zur axialen Ausrichtung an dem dem Konuspressabschnitt (25) zugewandten Ende des Presswerkzeugs (1) ein Anlagesteg (27) zur Anlage an einer Stirnfläche (35) des Pressfittings gebracht wird.

2. Verfahren nach Anspruch 1, **dadurch gekennzeichnet, dass** der Wulst (31) mit einem Zylinderabschnitt am Presswerkzeug (1) beaufschlagt wird.

3. Verfahren nach einem der Ansprüche 1 oder 2, **dadurch gekennzeichnet, dass** die rohreinsteckseitige weitere Verpressung im Bereich eines mindestens dem 1,5-fachen des Höhenmaßes (n) oder mehr des unverpressten Wulstes (31) entsprechenden Abstandes (t) vom Wulst (31) in Richtung auf das rohreinsteckseitige Pressfittingende hin durchgeführt wird, wobei, bevorzugt, an dem dem rohreinsteckseitigen Ende des Pressfittings (3) abgewandten Ende des Wulstes (31) mittels eines Lehrenabschnittes (29) an dem Presswerkzeug (1) eine Stabilisierung des Presswerkzeugs (1) relativ zu der Rohrlängsachse (x) durchgeführt wird und/oder, weiter bevorzugt, zwischen der Wulstverpressung und der rohreinsteckseitigen Verpressung eine Kalibrierverpressung durchgeführt wird.

4. Verfahren nach einem der vorangehenden Ansprüche, **dadurch gekennzeichnet, dass** die axiale Ausrichtung des Presswerkzeugs (1) mit Hilfe eines an einer Stirnfläche des Pressfittings (3) anliegenden Anlagestegs (27) durchgeführt wird, wobei, bevorzugt, auf der wulstabgewandten Seite des Anlagesteges (27) eine lehrenartige Umfassung des Rohres (2) vorgenommen wird und/oder, weiter bevorzugt, rohreinsteckseitig des Wulstes (31) ein radial vorgespannter Pressabschnitt (49) vorgesehen ist, der im Zuge des Verpressens und Erreichen der Vorspannkraft zur Einpassung in die übrige Verpressgeometrie radial ausweicht.

5. Verfahren nach Anspruch 4, **dadurch gekennzeichnet, dass** im Falle des vorgespannten Pressabschnitts die Vorspannung so ausgelegt wird, dass es vor einem Radialausweichen nicht zu einer plastischen Verformung des Fittings kommt.

6. Presswerkzeug (1) zum Verpressen von Pressfittingen (3) auf Rohren (2), wobei das Presswerkzeug (1) mindestens zwei Pressbacken (15,16,17,18) aufweist mit einer ersten Verpressgeometrie (21) zur Bildung eines Wulstpressabschnittes (22) und einer zweiten hierzu axial beabstandeten Verpressgeometrie (40) zur Bildung eines Konuspressabschnittes (25), wobei die mit einem größeren Durchmesser versehene erste Verpressgeometrie (21) einen Zylinderabschnitt aufweist, derart, dass eine Wulst (31) zumindest in einer Richtung Raum belassen ist zur axialen Verbreiterung, wobei weiter die zweite Verpressgeometrie nur einseitig der ersten Verpressgeometrie ausgebildet ist und zur Auszugssicherung einer verpressten Kombination aus Pressfitting (3) und Rohr (2) dient und zwischen dem Wulstpressabschnitt (22) und dem Konuspressabschnitt (25) ein Kalibrierpressabschnitt (23) ausgebildet ist, der hinsichtlich eines radialen Abstandes zwischen dem Wulstpressabschnitt (22) und dem Konuspressabschnitt (25) vorgesehen ist, wobei darüber hinaus der Konuspressabschnitt (25) gegenüber dem Wulstpressabschnitt (22) einen verringerten Radialinnenraum belässt und der Kalibrierpressabschnitt (23) einen radialen Innenraum belässt, dessen Durchmesser maßlich zwischen dem des Konuspressabschnittes (25) und des Wulstpressabschnittes (22) liegt und an dem dem Konuspressabschnitt (25) zugewandten Ende des Presswerkzeugs (1) ein Anlagesteg (27) vorgesehen ist, zur Anlage an einer Stirnfläche eines Pressfittings.

7. Presswerkzeug nach Anspruch 6, **dadurch gekennzeichnet, dass** in der Verpressgeometrie ein radial vorgespannter Pressabschnitt (49) vorgesehen ist, der im Zuge des Verpressens und Erreichen der Vorspannkraft zur Einpassung in die übrige Verpressgeometrie radial ausweicht.

8. Presswerkzeug nach einem der Ansprüche 6 oder 7, **dadurch gekennzeichnet, dass** ein Lehrenabschnitt (29) an dem Presswerkzeug (1) ausgebildet ist, wobei, bevorzugt, an dem Lehrenabschnitt (29) in Richtung der ersten Verpressgeometrie weisende Anlageelemente (47) vorgesehen sind.

9. Presswerkzeug nach einem der Ansprüche 6 bis 8, **dadurch gekennzeichnet, dass** der Kalibrierpressabschnitt (23) einen Zylinderabschnitt aufweist und/oder, bevorzugt, das Radialmaß (g) der Pressfläche (23') des Kalibrierpressabschnittes (23) gegenüber dem Radialmaß der Pressfläche (25') des Konuspressabschnittes (25) um 1,25mm oder mehr zurückweicht und/oder, weiter bevorzugt, das Radialmaß (d) der Zylinderfläche (22') des Wulstpressabschnittes (22) gegenüber dem Radialmaß der Pressfläche (23') des Kalibrierpressabschnittes (23) um 0,625 mm bis 5,625 mm vergrößert ist.

10. Presswerkzeug nach Anspruch 9, **dadurch gekennzeichnet, dass** zwischen dem Wulstpressabschnitt (22) und dem Kalibrierpressabschnitt (23) ein mindestens der axialen Breite (h) des Konuspressabschnittes (25) entsprechender Übergangsabschnitt (24) ausgebildet ist und/oder, bevorzugt, zwischen dem Wulstpressabschnitt (22) und dem Kalibrieipressabschnitt (23) ein weniger als der axialen Breite (h) des Konuspressabschnittes (25) entsprechender Übergangsabschnitt (24) ausgebildet ist, wobei, weiter bevorzugt, der radial vorgespannte Pressabschnitt (49) im Verpresszustand in den Übergangsabschnitt (24) zwischen dem Wulstpressabschnitt (22) und dem Kalibrierpressabschnitt (23) eingespannt ist.

11. Presswerkzeug nach einem der Ansprüche 6 bis 10, **dadurch gekennzeichnet, dass** der Zylinderabschnitt des Wulstpressabschnittes (22) eine axiale Länge (b) aufweist, die einem Mehrfachen der axialen Länge (h) des Konuspressabschnittes (25) entspricht.

12. Presswerkzeug nach einem der Ansprüche 9 oder 11, **dadurch gekennzeichnet, dass** der Zylinderabschnitt des Kalibrierpressabschnittes (23) eine axiale Länge (c) aufweist, die einem Mehrfachen der axialen Länge (h) des Konuspressabschnittes (25) entspricht.

13. Presswerkzeug nach einem der Ansprüche 6 bis 12, **dadurch gekennzeichnet, dass** der Konuspressabschnitt (25) eine axiale Länge (h) aufweist, die 1,25 bis 12,5 mm entspricht.

14. Presswerkzeug einem der Ansprüche 6 bis 13, **dadurch gekennzeichnet, dass** auf der dem Wulstpressabschnitt abgewandten Seite des Anlagesteges (27) ein zweiter Lehrenabschnitt (28) vorgesehen ist und/oder, weiter bevorzugt, der auf der Seite des ersten Verpressabschnittes vorgesehene erste Lehrenabschnitt (29) halbzylinderartig gebildet ist und/oder, darüber hinaus bevorzugt, der zweite Lehrenabschnitt (28) halbzylinderartig gebildet ist.

15. Presswerkzeug nach einem der Ansprüche 8 bis 14, **dadurch gekennzeichnet, dass** der erste Lehrenabschnitt (29) eine axiale Längserstreckung aufweist, die 3,75 mm oder mehr entspricht, wobei, bevorzugt, der erste Lehrenabschnitt (29) eine axiale Länge (m) aufweist, die einem Mehrfachen der axialen Länge (h) des Konuspressabschnittes (25) entspricht und/oder, weiter bevorzugt, das Radialmaß (g) der Pressfläche (23') des Kalibrierpressabschnittes (23) gegenüber dem Radialmaß der Pressfläche (25') des Konuspressabschnittes (25) um 1,25mm oder mehr zurückweicht und/oder, darüber hinaus bevorzugt, das Radialmaß (d) der Zylinderfläche (22') des Wulstpressabschnittes (22) gegenüber dem Radialmaß der Pressfläche (23') des Kalibrierpressabschnittes (23) um 0,625 mm bis 5,625 mm vergrößert ist.

## Claims

1. Method for the pressing of a press fitting (3), with a pipe (2) inserted into the press fitting (3), by means of a pressing tool (1), the press fitting (3) having an encircling bead (31), in which an O-ring seal (32) is placed, the pipe (2) ending within the press fitting (3) and a first pressing being carried out within the bead (31), a further pressing furthermore being carried out on the pipe-insert side of the press fitting end at a distance from the bead, the further pressing leading, as a result of a cone pressing portion on the pressing tool, to a conicity of the press fitting (3) and of the pipe (2) that extends in the same direction and the bead (31) being axially widened uniformly on both sides from an apex of the bead in the course of the pressing by being acted upon radially from the outside, the further pressing being furthermore carried out only on the pipe-insert side of the press fitting end to prevent the pressed combination of press fitting (3) and pipe (2) from being pulled off one another and without a pressing action of the fitting portion that extends behind the bead, seen in the direction of insertion of the pipe, and an engaging land (27) being brought into engagement against an end face (35) of the press fitting for axial alignment at the end of the pressing tool (1) that faces the cone pressing portion (25).

2. Method according to Claim 1, **characterized in that** the bead (31) is acted upon by a cylindrical portion on the pressing tool (1).

3. Method according to either of Claims 1 and 2, **characterized in that** the further pressing on the pipe-insert side is carried out in the region of a distance (t) from the bead (31) in the direction of the end of the pipe fitting on the pipe-insert side, the distance (t) corresponding to at least 1.5 times the height dimension (n) or more of the unpressed bead (31), preferably, at the end of the bead (31) facing away from the end of the press fitting (3) on the pipe-insert side, a stabilizing of the pressing tool (1) in relation to the longitudinal axis (x) of the pipe being carried out by means of a gage portion (29) on the pressing tool (1), and/or, more preferably, a calibrating pressing being carried out between the bead pressing and the pressing on the pipe-insert side.

4. Method according to any of the preceding claims, **characterized in that** the axial alignment of the pressing tool (1) is carried out with the aid of an engaging land (27) engaging on an end face of the press fitting (3), preferably, a gage-like grasping of the pipe (2) being performed on the side of the engaging land (27) that faces away from the bead, and/or, more preferably, a radially prestressed pressing portion (49), which yields radially in the course of the pressing and, when the prestressing force is reached, to adapt to the remaining pressing geometry, being provided on the pipe-insert side of the bead (31).

5. Method according to Claim 4, **characterized in that** in the case of the prestressed pressing portion, the prestress is designed such that plastic deformation of the fitting does not occur before radial yielding takes place.

6. Pressing tool (1) for the pressing of press fittings (3) onto pipes (2), the pressing tool (1) having at least two pressing jaws (15, 16, 17, 18) with a first pressing geometry (21) for forming a bead pressing portion (22), and a second pressing geometry (40), spaced apart axially from said first pressing geometry, for forming a cone pressing portion (25), the first pressing geometry (21) that is provided with a greater diameter having a cylindrical portion such that space is left for a bead (31), at least in one direction, for axial widening [of the bead], furthermore, the second pressing geometry being formed only on one side of the first pressing geometry and serving for preventing the pressed combination of press fitting (3) and pipe (2) from being pulled off one another, and a calibrating pressing portion (23) being formed between the bead pressing portion (22) and the cone pressing portion (25), the calibrating pressing portion being provided with regard to a radial distance between the bead pressing portion (22) and the cone pressing portion (25), furthermore, the cone pressing portion (25) leaving a reduced radial inner space with respect to the bead pressing portion (22), and the calibrating pressing portion (23 leaving a radial inner space, the diametral dimension of which is between that of the cone pressing portion (25) and that of the bead pressing portion (22), and, at the end of the pressing tool (1) that faces the cone pressing portion (25), an engaging land (27) being provided for engaging against an end face of a press fitting.

7. Pressing tool according to Claim 6, **characterized in that** a radially prestressed pressing portion (49) is provided in the pressing geometry, which pressing portion yields radially in the course of the pressing and when the prestressing force is reached, to adapt to the remaining pressing geometry.

8. Pressing tool according to either of Claims 6 and 7, **characterized in that** a gage portion (29) is formed on the pressing tool (1), engaging elements (47) being preferably formed on the gage portion (29) and facing in the direction of the first pressing geometry.

9. Pressing tool according to any of Claims 6 to 8, **characterized in that** the calibrating pressing portion (23) has a cylindrical portion and/or preferably, the radial dimension (g) of the pressing area (23') of the calibrating pressing portion (23) is set back with respect to the radial dimension of the pressing area (25') of the cone pressing portion (25) by 1.25 mm or more, and/or, more preferably, the radial dimension (d) of the cylindrical area (22') of the bead pressing portion (22) is increased with respect to the radial dimension of the pressing area (23') of the calibrating pressing portion (23) by 0.625 mm to 5.625 mm.

10. Pressing tool according to Claim 9, **characterized in that** a transitional portion (24) corresponding to at least the axial width (h) of the cone pressing portion (25) is formed between the bead pressing portion (22) and the calibrating pressing portion (23), and/or preferably a transitional portion (24) corresponding to less than the axial width (h) of the cone pressing portion (25) is formed between the bead pressing portion (22) and the calibrating pressing portion (23), more preferably, the radially prestressed pressing portion (49) being clamped, in the pressing state, into the transitional portion (24) between the bead pressing portion (22) and the calibrating pressing portion (23).

11. Pressing tool according to any of Claims 6 to 10, **characterized in that** the cylindrical portion of the bead pressing portion (22) has an axial length (b) which corresponds to a multiple of the axial length (h) of the cone pressing portion (25).

12. Pressing tool according to either of Claims 9 and 11, **characterized in that** the cylindrical portion of the calibrating pressing portion (23) has an axial length (c) which corresponds to a multiple of the axial length (h) of the cone pressing portion (25).

13. Pressing tool according to any of Claims 6 to 12, **characterized in that** the cone pressing portion (25) has an axial length (h) which equates to 1.25 to 12.5 mm.

14. Pressing tool according to any of Claims 6 to 13, **characterized in that** a second gage portion (28) is provided on the side of the engaging land (27) that faces away from the bead pressing portion, and/or more preferably, the first gage portion (29), provided on the side of the first pressing portion, is of a semi-cylindrical form, and/or, furthermore preferably, the second gage portion (28) is of a semi-cylindrical form.

15. Pressing tool according to any of Claims 8 to 14, **characterized in that** the first gage portion (29) has an axial longitudinal extent which equates to 3.75 mm or more, preferably, the first gage portion (29) having an axial length (m) which corresponds to a multiple of the axial length (h) of the cone pressing portion (25), and/or, more preferably, the radial dimension (g) of the pressing area (23') of the calibrating pressing portion (23) being set back with respect to the radial dimension of the pressing area (25') of the cone pressing portion (25) by 1.25 mm or more, and/or, furthermore preferably, the radial dimension (d) of the cylindrical area (22') of the bead pressing portion (22) being increased with respect to the radial dimension of the pressing area (23') of the calibrating pressing portion (23) by 0.625 mm to 5.625 mm.

## Revendications

1. Procédé de compression d'un raccord de compression (3) avec un tube (2) inséré dans le raccord de compression (3) au moyen d'un outil de compression (1), le raccord de compression (3) présentant un bourrelet périphérique (31), dans lequel un joint torique d'étanchéité (32) est inséré, le tube (2) se terminant à l'intérieur du raccord de compression (3) et une première compression étant réalisée à l'intérieur du bourrelet (31), une compression supplémentaire étant de plus réalisée du côté du tube inséré sur l'extrémité du raccord de compression à distance du bourrelet, compression qui, à la suite d'un segment presseur conique sur l'outil de presse, conduit à une conicité du raccord de compression (3) et du tube (2), s'étendant dans la même direction, et le bourrelet (31) au cours de la compression étant étalé axialement et uniformément des deux côtés, par une sollicitation radiale depuis l'extérieur et partant d'un sommet du bourrelet, de surcroît la compression supplémentaire n'étant réalisée que, du côté du tube inséré, sur l'extrémité du raccord de compression pour empêcher la séparation de la combinaison comprimée du raccord de compression (3) et du tube (2), sans une sollicitation de pression du segment de raccord s'étendant derrière le bourrelet et pour l'orientation axiale au niveau de l'extrémité de l'outil de presse (1) tournée vers le segment presseur conique (25), un support d'appui (27) est mis pour s'appuyer sur une face frontale (35) du raccord de compression.

2. Procédé selon la revendication 1, **caractérisé en ce que** le bourrelet (31) est sollicité avec un segment cylindrique sur l'outil de presse (1).

3. Procédé selon l'une des revendications 1 ou 2, **caractérisé en ce que** la compression supplémentaire, du côté du tube inséré, est réalisée dans la zone d'une distance (t) correspondant à au moins 1,5 fois ou plus la dimension de hauteur (n) du bourrelet (31) non comprimé, depuis le bourrelet (31) vers l'extrémité du raccord de compression du côté du tube inséré, dans lequel de préférence, au niveau de l'extrémité du bourrelet (31) tournée vers l'extrémité du raccord de compression (3) du côté du tube inséré, une stabilisation de l'outil de presse (1) par rapport à l'axe longitudinal du tube (x) est réalisée au moyen d'un segment de calibre (29) sur l'outil de presse (1) et/ou de façon particulièrement préférée, une compression d'étalonnage est réalisée entre la compression de bourrelet et la compression du côté du tube inséré.

4. Procédé selon l'une des revendications précédentes, **caractérisé en ce que** l'orientation axiale de l'outil de presse (1) est réalisée à l'aide d'un support d'appui (27) s'appuyant sur une face frontale du raccord de compression (3), dans lequel, de préférence, il est procédé à une saisie du tube (2), à la façon d'un calibre, du côté du support d'appui (27) faisant dos au bourrelet et/ou de façon particulièrement préférée, du côté du tube inséré du bourrelet (31), il est prévu un segment presseur (49) précontraint radialement qui dévie radialement au cours de la compression et en atteignant la force de précontrainte afin de s'intégrer dans le reste de la géométrie de compression.

5. Procédé selon la revendication 4, **caractérisé en ce que**, dans le cas du segment presseur précontraint, la précontrainte est agencée de manière qu'il ne se produise pas de déformation plastique du raccord avant la déviation radiale.

6. Outil de presse (1) pour comprimer des raccords de compression (3) sur des tubes (2), l'outil de presse (1) présentant au moins deux mâchoires de presse (15, 16, 17, 18) avec une première géométrie de compression (21) pour former un segment presseur (22) de bourrelet et une seconde géométrie de compression espacée axialement (40) de la première pour former un segment presseur conique (25), la première géométrie de compression (21) dotée d'un plus grand diamètre présentant un segment cylindrique de manière à laisser de la place au bourrelet (31) dans une direction pour un étalement axial, de plus la seconde géométrie de compression n'étant formée que d'un côté de la première géométrie de compression et servant à empêcher la séparation de la combinaison comprimée du raccord de compression (3) et du tube (2), et entre le segment presseur (22) de bourrelet et le segment presseur conique (25), un segment presseur d'étalonnage étant formé, qui est prévu, compte tenu d'une distance radiale entre le segment presseur (22) de bourrelet et le segment presseur conique (25), dans lequel, de surcroît, le segment presseur conique (25) par rapport au segment presseur (22) de bourrelet laisse un espace intérieur radial réduit et le segment presseur d'étalonnage (23) laisse un espace intérieur radial, dont le diamètre se trouve dimensionnellement entre celui du segment presseur conique (25) et celui du segment presseur de bourrelet (22), et au niveau de l'extrémité de l'outil de presse (1) tournée vers le segment presseur conique (25), il est prévu un support d'appui (27) afin de s'appuyer sur une face frontale du raccord de compression.

7. Outil de presse selon la revendication 6, **caractérisé en ce que**, dans la géométrie de compression, il est prévu un segment presseur radialement précontraint (49) qui dévie radialement au cours de la compression et en atteignant la force de précontrainte afin de s'intégrer dans le reste de la géométrie de compression.

8. Outil de presse selon l'une des revendications 6 ou 7, **caractérisé en ce qu'**un segment de calibre (29) est formé sur l'outil de presse (1), dans lequel, de préférence, au niveau du segment de calibre (29), il est prévu des éléments d'appui (47) orientés dans la direction de la première géométrie.

9. Outil de presse selon l'une des revendications 6 à 8, **caractérisé en ce que** le segment presseur d'étalonnage (23) présente un segment cylindrique et/ou, de préférence, la dimension radiale (g) de la surface d'appui (23') du segment presseur d'étalonnage (23) est en retrait de 1,25 mm ou plus par rapport à la dimension radiale de la surface d'appui (25') du segment presseur conique (25) et/ou de manière particulièrement préférée, la dimension radiale (d) de la surface cylindrique (22') du segment presseur de bourrelet (22) est augmentée de 0,625 mm à 5,625 mm par rapport à la dimension radiale de la surface d'appui (23') du segment presseur d'étalonnage(23).

10. Outil de presse selon la revendication 9, **caractérisé en ce qu'**un segment de transition (24) est formé entre le segment presseur de bourrelet (22) et le segment presseur d'étalonnage (23), correspondant au moins à la largeur axiale (h) du segment presseur conique (25) et/ou, de préférence, un segment de transition (24) est formé entre le segment presseur de bourrelet (22) et le segment presseur d'étalonnage (23), correspondant à moins de la largeur axiale (h) du segment presseur conique (25), dans lequel, de manière particulièrement préférée, le segment presseur (49) précontraint radialement est serré à l'état comprimé dans le segment de transition (24) entre le segment presseur de bourrelet (22) et le segment presseur d'étalonnage(23).

11. Outil de presse selon l'une des revendications 6 à 10, **caractérisé en ce que** le segment cylindrique du segment presseur de bourrelet (22) présente une longueur axiale (b) qui correspond à un multiple de la longueur axiale (h) du segment presseur conique (25).

12. Outil de presse selon l'une des revendications 9 ou 11, **caractérisé en ce que** le segment cylindrique du segment presseur d'étalonnage (23) présente une longueur axiale (c) qui correspond à un multiple de la longueur axiale (h) du segment presseur conique (25).

13. Outil de presse selon l'une des revendications 6 à 12, **caractérisé en ce que** le segment presseur conique (25) présente une longueur axiale (h) qui correspond à une longueur de 1,25 à 12,5 mm.

14. Outil de presse selon l'une des revendications 6 à 13, **caractérisé en ce que**, sur le côté du support d'appui (27) faisant dos au segment presseur de bourrelet, il est prévu un second segment de calibre (28) et/ou, de manière particulièrement préférée, le premier segment de calibre (29) prévu du côté du premier segment de compression est formé en demi-cylindre et/ou de manière tout particulièrement préférée, le second segment de calibre (28) est formé en demi-cylindre.

15. Outil de presse selon l'une des revendications 8 à 14, **caractérisé en ce que** le premier segment de calibre (29) présente une étendue longitudinale axiale qui correspond à 3,75 mm ou plus, dans lequel, de préférence, le premier segment de calibre (29) présente une longueur axiale (m) qui correspond à un multiple de la longueur axiale (h) du segment presseur conique (25), et/ou, de manière particulièrement préférée, la dimension radiale (g) de la surface d'appui (23') du segment presseur d'étalonnage (23) est en retrait de 1,25 mm ou plus par rapport à la dimension radiale de la surface d'appui (25') du segment presseur conique (25), et/ou, de manière tout particulièrement préférée, la dimension radiale (d) de la surface cylindrique (22') du segment presseur de bourrelet (22) est augmentée de 0,625 mm à 5,625 mm par rapport à la dimension radiale de la surface d'appui (23') du segment presseur d'étalonnage (23).
